# EUROPEAN PATENT APPLICATION

(11) **EP 3 115 912 A2**
(43) Date of publication of application: **11.01.2017**
(21) Application number: 16178057.2
(22) Date of filing: 05.07.2016
(51) Int. Cl.: G06F 17/30

(54) **METHOD FOR DISPLAYING WEB CONTENT AND ELECTRONIC DEVICE SUPPORTING THE SAME**

(30) Priority: 08.07.2015 KR 20150097024
(71) Applicant: Samsung Electronics Co., Ltd., Gyeonggi-do 16677 (KR)
(72) Inventor: Eom, Yuyoul, 16677 Suwon-si (KR); Jin, Pyeonggyu, 16677 Suwon-si (KR); Kim, Kwangsub, 16677 Suwon-si (KR)
(74) Representative: Nederlandsch Octrooibureau

(57) **Abstract**

A system and method are provided for displaying a web content, which enables a web content to be conveniently used on multiple screens and provide interactions among multiple screens. A first electronic device may receive web data from a content provider and generate a main DOM tree. The first electronic device may divide and transmit data relating to an expansion element from the web data to a second electronic device that generates an expanded DOM tree, processes the expanded DOM tree, and displays the same on a screen of the second electronic device. The second electronic device may detect a user input and identify whether an event for detecting the user input is included in the main DOM tree or the extended DOM tree and if the event is included in the main DOM tree or the extended DOM tree, the second electronic device may transmit the event to the first electronic device.

## Description

### TECHNICAL FIELD

The present disclosure relates to a method for displaying a web content and an electronic device supporting the same.

### BACKGROUND

Along with the developments of electronic technology and communication technology, electronic devices have become widely used in our lives. There are many cases in which recent electronic devices under development have been organically connected with external electronic devices by providing Internet of things (IoT) or machine to machine (M2M) services.

In addition, recent electronic devices have been developed such that one display can support multiple screens. Further, recent electronic devices have been developed to change the form of a display (for example, curving one section of a display) and divide the display into a changed part and an unchanged part, so that the display can support multiple screens. As such technologies are developed, a user can have a more convenient working environment for using a content than when using an electronic device of the related art supporting one screen by one display.

However, in the use of one web content at present, using multiple screens is not more convenient than using one screen for a user. It is because even though an electronic device supports multiple screens, a browser of the electronic device operates on only one screen. Therefore, although an electronic device supports multiple screens, one web content cannot use multiple screens.

Further, dividing one web content for each function and enabling the function to be performed using multiple devices does not exist. Where web content is divided, there is difficulty in separately developing a content that enables a web server to perform synchronization and communication for one web content loaded in each of electronic devices.

The above information is presented as background information only, and to assist with an understanding of the present disclosure. No determination has been made, and no assertion is made, as to whether any of the above might be applicable as prior art with regard to the present disclosure.

### SUMMARY

Aspects of the present disclosure are provided to address at least the above-mentioned problems and/or disadvantages, and to provide at least the advantages described below. Accordingly, an aspect of the present disclosure is to provide a method for displaying a web content and an electronic device supporting the same, which enable a web content to be conveniently used on multiple screens and provide interactions among multiple screens.

In accordance with an aspect of the present disclosure, an electronic device is provided. The electronic device includes a housing, at least one display that provides a first screen exposed in a part of the housing and a second screen arranged to be separate from the first screen, a wireless communication circuit, a processor electrically connected to the display and the wireless communication circuit, and a memory electrically connected to the processor, wherein the memory stores instructions that when executed, configure the processor to store, at least temporarily, content data in the memory, recognize an indication that a data part is to be displayed on the second screen, within the stored data, display the data part on the second screen based on the recognized indication, and display on the first screen, at least a part of the remainder of the content data.

In accordance with another aspect of the present disclosure, a method is provided. The method includes operations that receive a web content from a content provider, generate a main DOM tree and an expanded DOM tree by parsing web data corresponding to the web content, rendering a web content relating to the main DOM tree displayed on a first screen of the display unit, based on the main DOM tree, and rendering of a web content relating to the expanded DOM tree displayed on a second screen of the display unit, based on the expanded DOM tree.

In accordance with another aspect of the present disclosure, a computer-readable recording medium is provided in which a program for performing a method for displaying a web content by an electronic device is recorded. The method includes an operation of adding expansion data including one or more expansion elements to web data corresponding to the web content, and an operation of adding event related data to the one or more expansion elements.

According to various embodiments of the present disclosure, one web content may be able to be used on multiple screens and interactions among screens may be possible by adding an expansion element by an electronic device supporting multiple screens.

According to various embodiments of the present disclosure, one web content may also be able to be expanded and used, and interactions among screens by electronic devices may be possible, by adding an expansion element without a cumbersome operation of forming an individual server or channel among multiple electronic devices supporting at least one screen.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating an electronic device within a network environment according to various embodiments of the present disclosure;
FIG. 2 is a block diagram of an electronic device according to various embodiments of the present disclosure;
FIG. 3 is a block diagram of a program module according to various embodiments of the present disclosure;
FIG. 4 illustrates one of various embodiments of a web content expansion system including an electronic device according to an embodiment of the present disclosure;
FIGS. 5A to 5C are diagrams illustrating an embodiment of a content provider for displaying a web content according to various embodiments of the present disclosure;
FIG. 6A is a block diagram illustrating a configuration of a browser engine for displaying a web content according to various embodiments of the present disclosure;
FIG. 6B is a block diagram illustrating a document object model (DOM) tree of a hypertext markup language (HTML) document for displaying a web content according to various embodiments of the present disclosure;
FIGS. 7A and 7B are diagrams illustrating an embodiment displaying a web content according to various embodiments of the present disclosure;
FIGS. 8A and 8B are diagrams illustrating an embodiment displaying a web content according to various embodiments of the present disclosure;
FIGS. 9A and 9B are diagrams illustrating an embodiment displaying a web content according to various embodiments of the present disclosure; and
FIGS. 10A to 10C are diagrams illustrating a communication among electronic devices for displaying a web content according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the spirit and scope of the present disclosure. In addition, descriptions of well-known functions and constructions may be omitted for clarity and conciseness.

The terms and words used in the following description and claims are not limited to the bibliographical meanings, but are merely used to enable a clear and consistent understanding of the present disclosure. Accordingly, it should be apparent to those skilled in the art that the following description of various embodiments of the present disclosure is provided for illustration purpose only, and not for the purpose of limiting the present disclosure as defined by the appended claims and their equivalents.

It is to be understood that the singular forms "a", "an", and "the", include plural referents unless the context clearly dictates otherwise. Thus, for example, reference to "a component surface" includes reference to one or more of such surfaces.

The expressions such as "include" and "may include" which may be used in the present disclosure denote the presence of the disclosed functions, operations, and constituent elements, and do not limit one or more additional functions, operations, and constituent elements. In the present disclosure, the terms such as "include" and/or "have", may be construed to denote a certain characteristic, number, operation, constituent element, component or a combination thereof, but should not be construed to exclude the existence of or a possibility of the addition of one or more other characteristics, numbers, operations, constituent elements, components or combinations thereof.

In the present disclosure, the expression "and/or" includes any and all combinations of the associated listed words. For example, the expression "A and/or B" may include A, may include B, or may include both A and B.

In the present disclosure, expressions including ordinal numbers, such as "first", "second", and/or the like, may modify various elements. However, such elements are not limited by the above expressions. For example, the above expressions do not limit the sequence and/or importance of the elements. The above expressions are used merely for the purpose of distinguishing an element from the other elements. For example, a first user device and a second user device indicate different user devices, although both are user devices. For further example, a first element could be termed a second element, and similarly, a second element could also be termed a first element without departing from the scope of the present disclosure.

In the case where a component is referred to as being "connected" or "accessed" to another component, it should be understood that not only is the component connected or accessed to the other component, but also another component may exist between the component and the other component. In the case where a component is referred to as being "directly connected" or "directly accessed" to another component, it should be understood that there is no component therebetween.

The terms used in the present disclosure are used to describe specific various embodiments, and are not intended to limit the present disclosure. Singular forms are intended to include plural forms unless the context clearly indicates otherwise.

Unless otherwise defined, all terms including technical and/or scientific terms used herein have the same meaning as commonly understood by one of ordinary skill in the art to which the present disclosure pertains. In addition, unless otherwise defined, all terms defined in generally used dictionaries may not be overly interpreted.

The electronic device corresponds to at least one of a smartphone, a tablet personal computer (PC), a mobile phone, a video phone, an e-book reader, a desktop PC, a laptop PC, a netbook computer, a personal digital assistant (PDA), a portable multimedia player (PMP), a digital audio player (e.g., Moving Picture Experts Group phase 1 or phase 2 (MPEG-1 or MPEG-2) audio layer 3 (MP3) player), a mobile medical device, a camera, or a wearable device. Examples of the wearable device include a head-mounted-device (HMD) (e.g., electronic eyeglasses), electronic clothing, an electronic bracelet, an electronic necklace, an appcessory, an electronic tattoo, a smart watch, and the like.

The electronic device according to the embodiments of the present disclosure may also be smart home appliances. Examples of the smart home appliances include a television (TV), a digital video disc (DVD) player, an audio system, a refrigerator, an air-conditioner, a cleaning device, an oven, a microwave oven, a washing machine, an air cleaner, a set-top box, a TV box (e.g., Samsung HomeSync™, Apple TV™, or Google TV™), a game console, an electronic dictionary, an electronic key, a camcorder, an electronic album, or the like.

The electronic device according to the embodiments of the present disclosure may also include medical devices (e.g., magnetic resonance angiography (MRA), magnetic resonance imaging (MRI), computed tomography (CT), a scanning machine, an ultrasonic scanning device, and the like), a navigation device, a global positioning system (GPS) receiver, an event data recorder (EDR), a flight data recorder (FDR), a vehicle infotainment device, an electronic equipment for ships (e.g., navigation equipment, gyrocompass, and the like), avionics, a security device, a head unit for vehicles, an industrial or home robot, an automatic teller's machine (ATM), a point of sales (POS) system, and the like.

The electronic device according to the embodiments of the present disclosure may also include furniture or a portion of a building/structure, an electronic board, an electronic signature receiving device, a projector, various measuring instruments (e.g., a water meter, an electric meter, a gas meter and a wave meter) and the like. The electronic device according to the embodiments of the present disclosure may also include a combination of the devices listed above. In addition, the electronic device according to the embodiments of the present disclosure may be a flexible and/or contoured device. It should be obvious to those skilled in the art that the electronic device according to the embodiments of the present disclosure is not limited to the aforementioned devices.

Hereinafter, electronic devices according to embodiments of the present disclosure will be described in detail with reference to the accompanying drawings. In the description, the term a 'user' may refer to a person or a device that uses or otherwise controls the electronic device, e.g., an artificial intelligent electronic device.

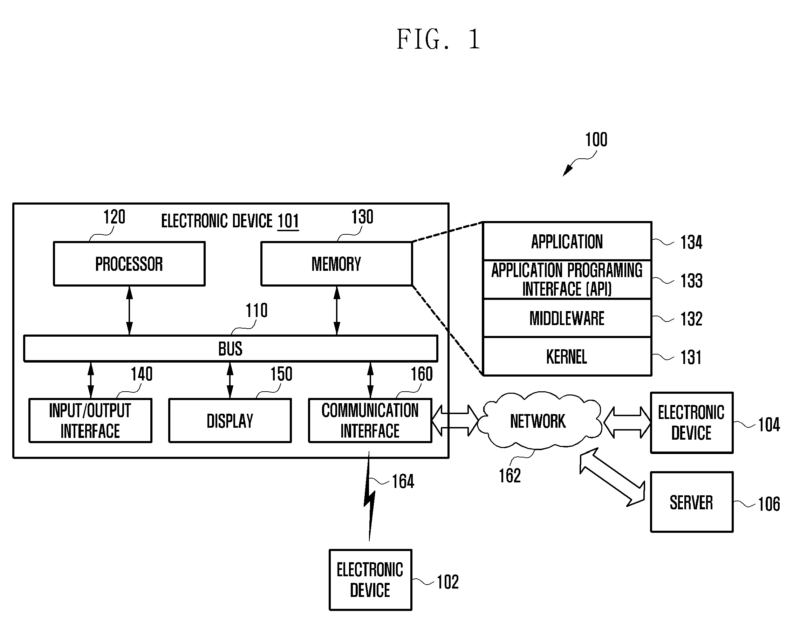

FIG. 1 illustrates a network environment including an electronic device according to an embodiment of the present disclosure.

Referring to FIG. 1, an electronic device 101 of a network environment 100 may include a bus 110, a processor 120, a memory 130, an input/output (I/O) interface 140, a display 150 and a communication interface 160.

The bus 110 may be a communication circuit that connects the components to each other and transfers data (e.g., control messages) between the components.

The processor 120 may receive instructions from the components (e.g., the memory 130, I/O interface 140, display 150 and communication interface 160) via the bus 110, decode the instructions and perform corresponding operations or data processing according to the decoded instructions.

The memory 130 may store instructions or data transferred from/created in the processor 120 or the other components (e.g., I/O interface 140, display 150 and communication interface 160). The memory 130 may include programming modules, e.g., a kernel 131, a middleware 132, an application programming interface (API) 133, and an application module 134. Each of the programming modules may be software, firmware, hardware or a combination thereof.

The kernel 131 may control or manage system resources (e.g., the bus 110, processor 120, and memory 130) used to execute operations or functions of the programming modules, e.g., the middleware 132, API 133, and application module 134. The kernel 131 may also provide an interface that can access and control/manage the components of the electronic device 101 via the middleware 132, API 133, and application module 134.

The middleware 132 may make it possible for the API 133 or application module 134 to perform data communication with the kernel 131. The middleware 132 may also perform control operations (e.g., scheduling and load balancing) for task requests transmitted from the application module 134 using, for example, a method for assigning the order of priority to use the system resources (e.g., the bus 110, processor 120, and memory 130) of the electronic device 101 to at least one of the applications of the application module 134.

The API 133 is an interface that allows the application module 134 to control functions of the kernel 131 or middleware 132. For example, the API 133 may include at least one interface or function (e.g., instruction) for file control, window control, character control, video process, and the like.

In embodiments of the present disclosure, the application module 134 may include applications that are related to short message service (SMS)/multimedia messaging service (MMS), email, calendar, alarm, health care (e.g., an application for measuring blood sugar level, a workout application, and the like), and environment information (e.g., atmospheric pressure, humidity, temperature, and the like). The application module 134 may be an application related to exchanging information between the electronic device 101 and the external electronic devices (e.g., an electronic device 104). The information exchange-related application may include a notification relay application for transmitting specific information to an external electronic device or a device management application for managing external electronic devices.

For example, the notification relay application may include a function for transmitting notification information, created by the other applications of the electronic device 101 (e.g., SMS/MMS application, email application, health care application, environment information application, and the like), to an external electronic device (e.g., electronic device 104). In addition, the notification relay application may receive notification information from an external electronic device (e.g., electronic device 104) and provide it to the user. The device management application can manage (e.g., install, delete, or update) part of the functions of an external electronic device (e.g., electronic device 104) communicating with the electronic device 101, e.g., turning on/off the external electronic device, turning on/off part of the components of the external electronic device, adjusting the brightness or the display resolution of the display of the external electronic device, and the like, applications operated in the external electronic device, or services from the external electronic device, e.g., call service or messaging service, and the like.

In various embodiments of the present disclosure, the application module 134 may also include applications designated according to attributes (e.g., type of electronic device) of the external electronic device (e.g., electronic device 104). For example, if the external electronic device is an MP3 player, the application module 134 may include an application related to music playback. If the external electronic device is a mobile medical device, the application module 134 may include an application related to health care. In an embodiment of the present disclosure, the application module 134 may include an application designated in the electronic device 101 and applications transmitted from external electronic devices (e.g., server 106, electronic device 104, and the like).

The I/O interface 140 may receive instructions or data from the user via an I/O system (e.g., a sensor, keyboard or touch screen) and transfers them to the processor 120, memory 130 or communication interface 160 through the bus 110. For example, the I/O interface 140 may provide data corresponding to a user's touch input to a touch screen to the processor 120. The I/O interface 140 may receive instructions or data from the processor 120, memory 130 or communication interface 160 through the bus 110, and output them to an I/O system (e.g., a speaker or a display). For example, the I/O interface 140 may output voice data processed by the processor 120 to a speaker.

The display 150 may display information (e.g., multimedia data, text data, and the like) on a screen so that the user can view it.

The communication interface 160 may communicate between the electronic device 101 and an external system (e.g., an electronic device 104 or server 106). For example, the communication interface 160 may connect to a network 162 in a wireless or wired mode, and communicate with the external system. Wireless communication may include Wi-Fi, Bluetooth (BT), near field communication (NFC), GPS or cellular communication (e.g., long term evolution (LTE), LTE-advanced (LTE-A), code division multiple access (CDMA), wideband CDMA (WCDMA), universal mobile telecommunications system (UMTS), wireless broadband (Wi-Bro), global system for mobile communications (GSM), and the like). In addition, the wireless communication may include, for example, short range communication 164. Wired communication may include universal serial bus (USB), high definition multimedia interface (HDMI), recommended standard 232 (RS-232), plain old telephone service (POTS), and the like.

In an embodiment of the present disclosure, the network 162 may be a telecommunication network. The telecommunication network may include a computer network, Internet, Internet of things (IoT), telephone network, and the like. The protocol for communication between the electronic device 101 and the external system, e.g., transport layer protocol, data link layer protocol, or physical layer protocol, may be supported by at least one of the application module 134, API 133, middleware 132, kernel 131 and communication interface 160.

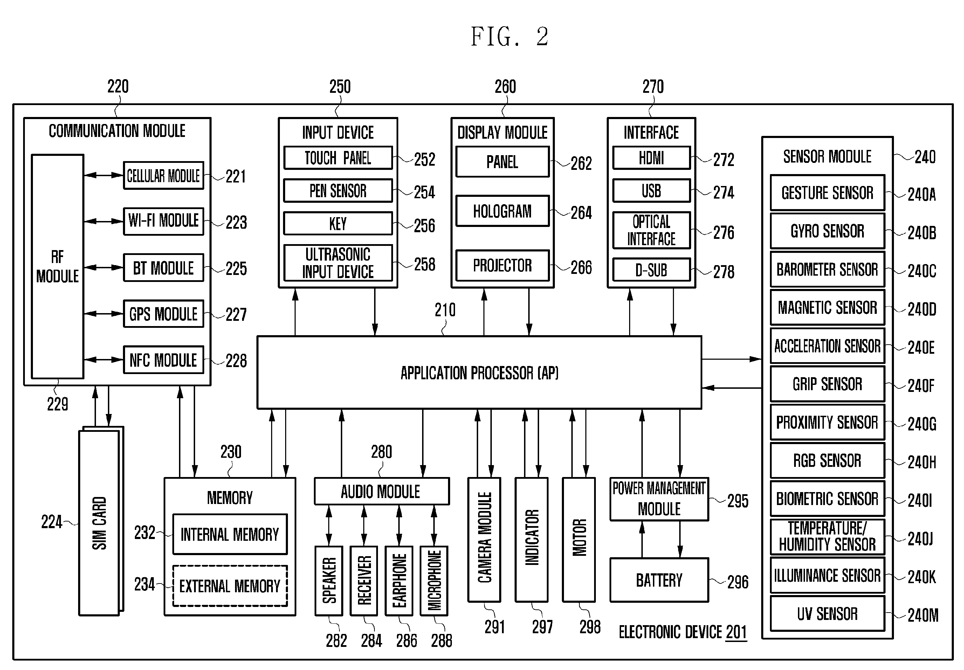

FIG. 2 illustrates a block diagram of an electronic device according to an embodiment of the present disclosure.

Referring to FIG. 2, an electronic device 201 may be all or part of the electronic device 101 as shown in FIG. 1, and may include one or more processors of an application processor (AP) 210, a communication module 220, a subscriber identification module (SIM) card 224, a memory 230, a sensor module 240, an input device 250, a display module 260, an interface 270, an audio module 280, a camera module 291, a power management module 295, a battery 296, an indicator 297, and a motor 298.

The AP 210 may control a number of hardware or software components connected thereto by executing the operation system or applications, process data including multimedia data, and perform corresponding operations. The AP 210 may be implemented with a system on chip (SoC). In an embodiment of the present disclosure, the AP 210 may further include a graphics processing unit (GPU).

The communication module 220 (e.g., communication interface 160) performs communication for data transmission/reception between the other electronic devices (e.g., an electronic device 102 or 104, and server 106) that are connected to the electronic device (e.g., electronic device 101) via the network. In an embodiment of the present disclosure, the communication module 220 may include a cellular module 221, a Wi-Fi module 223, a BT module 225, a GPS module 227, an NFC module 228 and a radio frequency (RF) module 229.

The cellular module 221 may provide voice call, video call, SMS or Internet service, and the like, via a communication network (e.g., LTE, LTE-A, CDMA, WCDMA, UMTS, Wi-Bro, GSM, and the like). The cellular module 221 may also perform identification or authentication for electronic devices in a communication network by using their SIM (e.g., SIM card 224). In an embodiment of the present disclosure, the cellular module 221 may perform part of the functions of the AP 210. For example, the cellular module 221 may perform part of the functions for controlling multimedia.

In an embodiment of the present disclosure, the cellular module 221 may include a communication processor (CP). The cellular module 221 may be implemented with, for example, an SoC. Although the embodiment of the present disclosure shown in FIG. 2 is implemented in such a way that the cellular module 221 (e.g., CP), the power management module 295, the memory 230, and the like, are separated from the AP 210, an embodiment can be modified in such a way that the AP 210 includes at least part of the listed elements or other elements of the device 201 (e.g., cellular module 221).

In an embodiment of the present disclosure, the AP 210 or the cellular module 221 (e.g., CP) may load instructions or data transmitted to and from at least one of a non-volatile memory or other components, on a volatile memory and then process them. The AP 210 or the cellular module 221 may also store data which is transmitted from/created in at least one of the components, in a non-volatile memory.

The Wi-Fi module 223, the BT module 225, the GPS module 227 and the NFC module 228 may include processors for processing transmission/reception of data, respectively. Although the embodiment of the present disclosure shown in FIG. 2 is implemented in such a way that the cellular module 221, Wi-Fi module 223, BT module 225, GPS module 227, and NFC module 228 are separated from each other, an embodiment can be modified in such a way that parts of the elements (e.g., two or more) are included in an integrated chip (IC) or an IC package. For example, part of the processors corresponding to the cellular module 221, Wi-Fi module 223, BT module 225, GPS module 227, and NFC module 228, e.g., a CP corresponding to the cellular module 221 and a Wi-Fi processor corresponding to the Wi-Fi 223, may be implemented with a SoC.

The RF module 229 may transmit or receive data, e.g., RF signals. The RF module 229 may include a transceiver, a power amplifier module (PAM), a frequency filter, a low noise amplifier (LNA), and the like. The RF module 229 may also include parts for transmitting/receiving electromagnetic waves, e.g., conductors, wires, and the like, via free space during wireless communication. Although the embodiment of the present disclosure shown in FIG. 2 is implemented in such a way that the cellular module 221, Wi-Fi module 223, BT module 225, GPS module 227, and NFC module 228 share the RF module 229, an embodiment can be modified in such a way that at least one of the elements transmit or receive RF signals via a separate RF module.

The SIM card 224 may be a card with a SIM. The SIM card 224 may be fitted into a slot of the electronic device. The SIM card 224 may include unique identification information, e.g., integrated circuit card identifier (ICCID), or subscriber information, e.g., international mobile subscriber identity (IMSI).

The memory 230 (e.g., memory 130) may include built-in or internal memory 232 and/or external memory 234. The built-in memory 232 may include at least one of a volatile memory, e.g., dynamic random access memory (DRAM), static RAM (SRAM), synchronous dynamic RAM (SDRAM), and the like, non-volatile memory, e.g., one time programmable read only memory (OTPROM), programmable ROM (PROM), erasable and programmable ROM (EPROM), electrically erasable and programmable ROM (EEPROM), mask ROM, flash ROM, NAND flash memory, NOR flash memory, and the like.

In an embodiment of the present disclosure, the built-in memory 232 may be a solid state drive (SSD). The external memory 234 may further include a flash drive, e.g., compact flash (CF), secure digital (SD), micro-SD, mini-SD, extreme digital (XD), a memory stick, and the like. The external memory 234 may be functionally connected to the electronic device via various types of interfaces. In an embodiment of the present disclosure, the electronic device 101 may further include storage devices or storage media such as hard drives.

The sensor module 240 may measure a physical quantity or sense operation states of the electronic device 201 and convert the measured or sensed data into electrical signals. The sensor module 240 may include at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., red-green-blue (RGB) sensor), a biosensor 240I, a temperature/humidity sensor 240J, an luminance sensor 240K, and an ultra-violet (UV) sensor 240M.

The sensor module 240 may also include an e-nose sensor, electromyography (EMG) sensor, an electroencephalogram (EEG) sensor, an electrocardiogram (ECG) sensor, an infrared (IR) sensor, a fingerprint sensor, an iris sensor, and the like. The sensor module 240 may further include a control circuit for controlling the one or more sensors.

The input system 250 may include a touch panel 252, a pen sensor 254 (i.e., a digital pen sensor), a key 256 and an ultrasonic input device 258. The touch panel 252 may sense touches using a capacitive sensing mode, a pressure sensing mode, an infrared sensing mode, and an ultrasonic sensing mode. The touch panel 252 may further include a control circuit. When the touch panel 252 is designed to operate in a capacitive sensing mode, the panel can also sense mechanical/physical touches or proximity of an object. The touch panel 252 may further include a tactile layer. In that case, the touch panel 252 can also provide tactile feedback to the user.

The pen sensor 254 (i.e., digital pen sensor) may be detected in a same or similar way as receiving a user's touch input or by using a separate recognition sheet. The key 256 may include mechanical buttons, optical keys or a key pad. The ultrasonic input device 258 is a device that can sense sounds via a microphone 288 of the electronic device 201 by using an input tool for generating ultrasonic signals, and then receiving and checking data associated with the signals. The ultrasonic input device 258 can sense signals in a wireless mode. In an embodiment of the present disclosure, the electronic device 201 may also receive a user's inputs from an external system (e.g., a computer or server) via the communication module 220.

The display module 260 (e.g., display 150) may include a panel 262, a hologram unit 264, or a projector 266. The panel 262 may be implemented with a liquid crystal display (LCD), active matrix organic light emitting diodes (AMOLEDs), or the like. The panel 262 may be implemented in a flexible, transparent, impact-resistant, and/or wearable form. The panel 262 may form a single module with the touch panel 252. The hologram unit 264 shows a three-dimensional image in the air using interference of light. The projector 266 may display images by projecting light on a screen. The screen may be placed, for example, inside or outside of the electronic device 201. In an embodiment of the present disclosure, the display module 260 may further include a control circuit for controlling the panel 262, the hologram unit 264, or the projector 266.

The interface 270 may include a HDMI 272, a USB 274, an optical interface 276, a D-subminiature (D-sub) 278, and the like. The interface 270 may also be included in the communication interface 160 shown in FIG. 1. The interface 270 may also include a mobile high-definition link (MHL) interface, an SD card, a multi-media card (MMC) interface, an infrared data association (IrDA) standard interface, or the like.

The audio module 280 may provide conversions between audio and electrical signals. At least part of the components in the audio module 280 may be included in the I/O interface 140 shown in FIG. 1. The audio module 280 may process audio output from/input to, for example, a speaker 282, a receiver 284, earphones 286, the microphone 288, and the like.

The camera module 291 may take still images or moving images. In an embodiment of the present disclosure, the camera module 291 may include one or more image sensors (e.g., on the front side and/or the back side), a lens, an image signal processor (ISP), a flash (e.g., an LED or a xenon lamp), or the like.

The power management module 295 may manage electric power supplied to the electronic device 201. The power management module 295 may include a power management integrated circuit (PMIC), a charger IC, a battery or fuel gauge, and the like.

The PMIC may be implemented in the form of an IC chip or SoC. Charging electric power may be performed in wired and/or wireless modes. The charger IC may charge a battery, and prevent input over-voltage or input overcurrent to the battery from a charger. In an embodiment of the present disclosure, the charger IC may be implemented with a wired charging type and/or a wireless charging type. Examples of the wireless charging type of the charger IC are a magnetic resonance type, a magnetic induction type, an electromagnetic type, an acoustic type, and the like. If the charger IC is implemented with a wireless charging type, it may also include an additional circuit for wireless charging, e.g., a coil loop, a resonance circuit, a rectifier, and the like.

The battery gauge may measure a residual amount of the battery 296, a level of voltage, a level of current, a temperature during the charge, and the like. The battery 296 stores electric power and supplies it to the electronic device 201. The battery 296 may include a rechargeable battery or a solar battery.

The indicator 297 shows states of the electronic device 201 or of the parts thereof (e.g., the AP 210), e.g., a booting state, a message state, a recharging state, and the like. The motor 298 converts an electrical signal into a mechanical vibration. Although not shown, the electronic device 201 may include a processor for supporting a mobile TV, e.g., a GPU. The mobile TV supporting processor may process media data that complies with standards of digital multimedia broadcasting (DMB), digital video broadcasting (DVB), media flow, and the like.

Each of the elements/units of the electronic device according to the present disclosure may be implemented with one or more components, and may be called different names according to types of electronic devices. The electronic device according to the present disclosure may include at least one element described above. The electronic device may also be modified in such a way as to remove part of the elements or include new elements. In addition, the electronic device according to the present disclosure may also be modified in such a way that parts of the elements are integrated into one entity that performs their original functions.

In the present disclosure, the terminology 'module' refers to a 'unit' including hardware, software, firmware or a combination thereof. For example, the terminology 'module' is interchangeable with 'unit,' 'logic,' 'logical block,' 'component,' 'circuit,' and the like. A 'module' may be the least identifiable unit or part of an integrated component. A 'module' may also be the least unit or part thereof that can perform one or more functions of the module. A 'module' may be implemented through mechanical or electronic modes. For example, 'modules' according to the embodiments of the present disclosure may be implemented with at least one of an application specific integrated circuit (ASIC) chip, a field-programmable gate array (FPGAs) and a programmable-logic device that can perform functions that are known or will be developed.

An electronic device according to various embodiments of the present disclosure may also include a communication module including a BT module for communicating with external devices, a display module for displaying data of an external device selected from the external devices, and an AP for selecting an external device having transmitted data corresponding to a signal among data received from the external devices, wherein the AP transmits signals to the external devices, receives data for the signals from the external devices, selects one of the external devices based on the received data, and transmits an operation execution signal to the selected external device.

An electronic device according to various embodiments of the present disclosure may also include a communication module for communicating with the external devices, a display module for displaying data of an external device selected from the external devices, and an AP for selecting an external device having transmitted data corresponding to a signal among data received from the external devices, wherein the AP transmits signals to the external devices, receives data for the signals from the external devices, selects one of the external devices based on the received data, and transmits an operation execution signal to the selected external device.

An electronic device according to various embodiments of the present disclosure may also include a display module for displaying data received from an external device, a communication module for communicating with the electronic device or the external device, a sensor module for measuring a sensor value corresponding to a data request signal received from the electronic device, and an AP for selecting an external device to transmit data corresponding to a signal transmitted from the electronic device among the data received from the external device, wherein the AP receives the signal from the electronic device, transmits the data corresponding to the signal to the electronic device, receives an operation execution signal for the data from the electronic device, and performs at least one of various operations according to the operation execution signal.

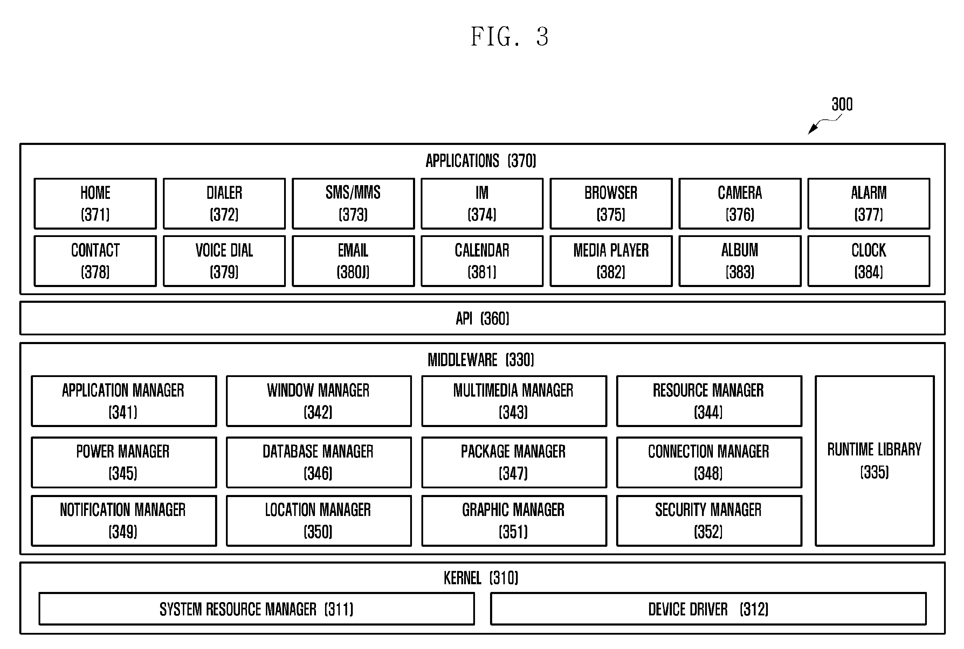

FIG. 3 is a block diagram of a program module according to various embodiments of the present disclosure.

Referring to FIG. 3, a program module 300 may include an OS for controlling resources related to the electronic device and/or various applications executed in the operating system. The OS may be, for example, Android, iOS, Windows, Symbian, Tizen, Bada, or the like.

The program module 300 includes a kernel 310, middleware 330, an API 360, and/or applications 370. At least some of the program module 300 may be preloaded on an electronic device, or may be downloaded from an external electronic device (e.g., the electronic device 102 or 104, or the server 106).

The kernel 310 may include, for example, a system resource manager 311 and/or a device driver 312. The system resource manager 311 may perform control, allocation, retrieval, or the like, of system resources. According to an embodiment, the system resource manager 311 may include a process manager, memory manager, file system manager, or the like. The device driver 312 may include, for example, a display driver, camera driver, Bluetooth driver, shared memory driver, USB driver, keypad driver, Wi-Fi driver, audio driver, or inter-process communication (IPC) driver.

The middleware 330 may provide a function required by the applications 370 in common, or provide various functions to the applications 370 through the API 360 so that the applications 370 can efficiently use limited system resources within the electronic device. According to an embodiment of the present disclosure, the middleware 330 may include, for example, at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include a library module which a compiler uses in order to add a new function through a programming language while the applications 370 are being executed. The runtime library 335 may perform input/output management, memory management, functionality for an arithmetic function, or the like.

The application manager 341 may manage, for example, a life cycle of at least one of the applications 370. The window manager 342 may manage graphical user interface (GUI) resources used for the screen. The multimedia manager 343 may determine a format required to reproduce various media files, and may encode or decode a media file by using a coder/decoder (codec) appropriate for the corresponding format. The resource manager 344 may manage resources such as a source code, memory, and storage space of at least one of the applications 370.

The power manager 345 may operate together with a basic input/output system (BIOS) to manage a battery or other power, and may provide power information required for the operation of the electronic device. The database manager 346 may generate, search for, and/or change a database to be used by at least one of the applications 370. The package manager 347 may manage the installation or update of an application distributed in the form of a package file.

The connectivity manager 348 may manage a wireless connection such as, for example, Wi-Fi or Bluetooth. The notification manager 349 may display or notify of an event, such as an arrival message, appointment, proximity notification, and the like, in such a manner as not to disturb the user. The location manager 350 may manage location information of the electronic device. The graphic manager 351 may manage a graphic effect, which is to be provided to the user, or a user interface related to the graphic effect. The security manager 352 may provide various security functions required for system security, user authentication, and the like. According to an embodiment of the present disclosure, when the electronic device has a telephone call function, the middleware 330 may further include a telephony manager for managing a voice call function or a video call function of the electronic device.

The middleware 330 may include a middleware module that forms a combination of various functions of the above-described elements. The middleware 330 may provide a module specialized for each type of OS in order to provide a differentiated function. Also, the middleware 330 may dynamically delete some of the existing elements, or may add new elements as required.

The API 360 is, for example, a set of API programming functions, and may be provided with a different configuration according to an OS. For example, in the case of Android or iOS, one API set may be provided for each platform. In the case of Tizen, two or more API sets may be provided for each platform.

The applications 370 may include, for example, one or more applications which can provide functions such as home 371, dialer 372, short message service (SMS)/multimedia message service (MMS) 373, instant message (IM) 374, browser 375, camera 376, alarm 377, contacts 378, voice dialer 379, email 380, calendar 381, media player 382, album 383, clock 384, health care (e.g., measure exercise quantity or blood sugar), or environment information (e.g., atmospheric pressure, humidity, or temperature information).

According to an embodiment of the present disclosure, the applications 370 may include an application (hereinafter, referred to as an "information exchange application" for convenience of the description) supporting information exchange between the electronic device and an external electronic device (e.g., the electronic device 102 or 104). The information exchange application may include, for example, a notification relay application for transferring specific information to an external electronic device or a device management application for managing an external electronic device.

For example, the notification relay application may include a function of transferring, to the external electronic device (e.g., the electronic device 102 or 104), notification information generated from other applications of the electronic device 101 (e.g., an SMS/MMS application, e-mail application, health management application, or environmental information application). Further, the notification relay application may receive notification information from, for example, an external electronic device and provide the received notification information to a user.

The device management application may manage (e.g., install, delete, or update), for example, at least one function of an external electronic device (e.g., the electronic device 102 or 104) communicating with the electronic device (e.g., a function of turning on/off the external electronic device or some components thereof, or a function of adjusting luminance or a resolution of the display), applications operating in the external electronic device, or services provided by the external electronic device (e.g., a call service and a message service).

According to an embodiment of the present disclosure, the applications 370 may include an application (e.g., a health care application of a mobile medical device or the like) designated according to an attribute of the external electronic device (e.g., the electronic device 102 or 104). According to an embodiment, the applications 370 may include an application received from the external electronic device (e.g., the server 106, or the electronic device 102 or 104). According to an embodiment of the present disclosure, the applications 370 may include a preloaded application or a third party application which can be downloaded from the server. Names of the elements of the program module 300, according to the above-described embodiments of the present disclosure, may change depending on the type of OS.

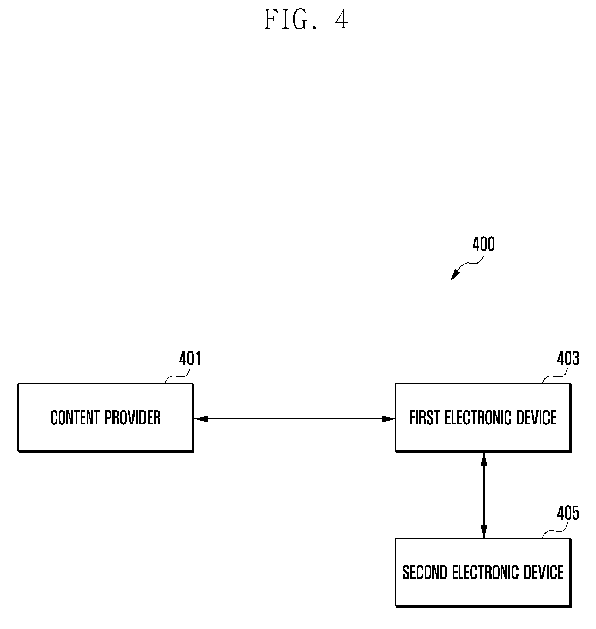

FIG. 4 illustrates a web content expansion system including an electronic device according to an embodiment of the present disclosure.

Referring to FIG. 4, a system 400 according to various embodiments of the present disclosure may include a content provider 401 and a first electronic device 403. A second electronic device 405 may also be included in the system 400 when a communication connection between the first electronic device 403 and the second electronic device 405 is available.

According to various embodiments, a content provider 401 that is a server providing a web content, may generate various content provided on the web and perform a function to provide the content through the Internet environment. Hereinafter, an embodiment of a case where content provided by the content provider 401 is web content is described. However, content to be processed in various embodiments of the present disclosure is not limited to web content only.

According to various embodiments, the content provider 401 may transmit content data to an electronic device. The content data may include data relating to a web content and the data is referred to as web data. Web data may include a resource for configuring a web content such as a hypertext markup language (HTML) document, a cascading style sheet (CSS), JavaScript, an image, and Flash. An HTML document may interconnect a CSS with JavaScript, an image, Flash, and the like, by mutually connecting the same. A CSS may be a style sheet in which an overall style of a web content may be pre-stored. JavaScript may describe a script language run in a browser, and perform a function that dynamically changes a web content.

The content provider 401 may generate a web content including various elements. For example, a web content may be configured by web data including an HTML document and the content provider 401 may add at least one element to the HTML document. According to an embodiment, the content provider 401 may also display the content of an element added on a screen among multiple screens by adding the element to the HTML document. In addition, the content provider 401 may control a screen according to an event of the added element. For example, the element may perform a function to display the content, and additionally have an attribute and data relating to the event. The screen may be a sub-screen, and not a main screen, when an electronic device has multiple screens. The sub-screen may be located on one surface of the main screen. Alternatively, the sub-screen may be divided physically or by software from the main screen. Alternatively, the sub-screen may be a screen of an external electronic device in communication with the electronic device.

Referring to FIG. 4, an electronic device may be described as the first electronic device 403, and an external electronic device in communication with the electronic device may be described as the second electronic device 405. A main screen and sub-screen of the electronic device 403 and 405 may be configured by a user. In addition, a screen of the electronic device 403 and 405 may be an area in which a web content is displayed on a display, and the display may correspond to the display module 260 in FIG. 2. The screen may be the entire display, or only a part of the display.

An element added by the content provider 401 is referred to as "an expansion element". For example, an expansion element may be expressed as <expansion> within an HTML document. Data related to the expansion element is referred to as expansion data.

The content provider 401 may add a CSS related expansion element to a CSS document of web data, and add a JavaScript related expansion element to a JavaScript document, but embodiments are not limited thereto.

According to various embodiments of the present disclosure, expansion data may be configured by a <header>, <article>, or the like, that are elements of a HTML document. For example, a content displayed on a sub-screen may display a part of a content displayed on a main screen, if the sub-screen displays expansion data. The sub-screen may display a web content on multiple screens by displaying a part of the content of the main screen. Displaying a part of the content may mean that the content displayed on the main screen may be duplicated and displayed on the sub-screen. In addition, displaying a part of the content may mean that the content to be displayed on the main screen may be displayed on the sub-screen. Alternatively, the content that is not displayed on the main screen may be displayed on the sub-screen. For example, despite an HTML document including an expansion element, a content included in the expansion element may not be displayed if an electronic device for displaying the HTML document does not have a sub-screen.

According to various embodiments of the present disclosure, an expansion element may include both contents to be displayed on a screen and data related to an event that is to control the screen. The attribute of data related to the event may be configured by the content provider 401.

According to various embodiments of the present disclosure, an event may be a ScreenControl, SleepTimer, TargetDevice, ScreenExtension, OnDisplay2ndScreen, OnDisplayl stScreen, and so on.

ScreenControl may be an event that controls a screen on which the expansion element is displayed. ScreenControl may be performed by receiving a hardware button input by a user. The attribute of ScreenControl may be configured to be activated and deactivated.

According to an embodiment of the present disclosure, an electronic device supporting multiple screens may turn on and off a sub-screen on which an expansion element is displayed, through a hardware button input by a user when the attribute of a ScreenControl event is activated. If the attribute of a ScreenControl event is deactivated, a sub-screen on which an expansion element is displayed is always turned on, and the screen may not be able to be turned on or off despite an input of the hardware button. Since a previous expansion element may be deleted when a main screen additionally loads another web content, the sub-screen displaying the previous expansion element may no longer display the previous expansion element.

A SleepTimer event may configure a display time on a screen relating to the event. The attribute of SleepTimer may be configured to be -s or a predetermined time. When the attribute of a SleepTimer is configured to be -s, it may mean that the SleepTimer event has not yet been processed. When the attribute of a SleepTimer is configured to be a predetermined time, it may mean that a screen is configured to be automatically turned off when there is no input during the predetermined time in a state where the screen is turned on.

According to an embodiment of the present disclosure, an electronic device supporting multiple screens may control a sub-screen on which an expansion element is displayed to be turned off after 10 seconds when a SleepTimer event is configured to be 10s.

A TargetDevice event may designate a particular screen on which a particular web content is to be displayed. The attribute of TargetDevice may be configured to be "This", "Glasses", "Watch", and so on. According to an embodiment of the present disclosure, an electronic device having multiple screens may display on a sub-screen, a web content relating to an expansion element when the attribute of TargetDevice is configured to be "This".

According to another embodiment of the present disclosure, the attribute of TargetDevice may be configured to be "This, Glasses, and Watch". In this case, an electronic device may identify the presence or absence of a sub-screen in the order of the attribute being configured among the other electronic devices which are connected. If it is identified that the electronic device has a sub-screen in "Glasses", an expansion element may be rendered so that a web content relating to the expansion element may be displayed on the sub-screen of "Glasses".

A DefaultDisplay event may prepare for a case where a sub-screen does not exist when a web content is loaded on a main screen. The attribute of the event may be configured as "True" or "False". For example, when the attribute of DefaultDisplay event is "True", expansion data may be displayed in a particular area of a main screen, for example, at the bottom of the screen, at the left side of the screen, and so on, despite the absence of a sub-screen. When the attribute of DefaultDisplay event is "False", expansion data may not be displayed if there is no sub-screen.

A ScreenExtension event may expand a web content corresponding to an expansion element into multiple screens. The attribute of ScreenExtension event may be configured to be "Dual/Clone/Etc". If the attribute of TargetDevice event is "This" and the attribute of ScreenExtension event is "Dual", a web content corresponding to an expansion element may be expanded and displayed on the other screen through HDMI and the like.

An OnDisplay2ndScreen event may generate a particular event when a sub-display is turned on and off, wherein the particular event may be transmitted to a main screen through a browser and trigger the event received by the main screen. The OnDisplay2ndScreen event generates a particular event when a main screen is turned on and off, wherein the particular event may be transmitted to a sub-screen through a browser, and trigger the event received by the sub-screen.

The above described events are to explain the present disclosure and embodiments are not limited thereto, and may include other events and attributes in addition to the described events and attributes.

In addition, both a screen related event and other events may be included within an expansion element. Further, both an expansion element and other elements within an HTML document may include events.

Referring again to FIG. 4, the first electronic device 403 in the system 400 may correspond to the electronic device 101 in FIG. 1 and the electronic device 201 in FIG. 2.

The first electronic device 403 may include an AP 210 as described in FIG. 2, and include the browser 375 of an application 370 as described in FIG. 3. Although not shown in FIG. 3, the browser 375 may include a browser engine. The browser engine may process web data in order to display, by the browser 375, a web content on a screen.

The first electronic device 403 may have a browser and a browser engine. In addition, the first electronic device 403 may have an individual browser and browser engine in order to process an expansion element. For example, the browser engine of the first electronic device 403 may process document object model (DOM) nodes generated after parsing a web content. According to an embodiment, when the first electronic device 403 has an individual browser and browser engine in order to process an expansion element, the browser engine for processing an expansion element may process an expansion element in web data. The browser for processing an expansion element may display a content described in the expansion element on a sub-screen or a main screen. Further, a sub-screen may be controlled to perform a particular function according to an event described in the expansion element. Further, the first electronic device may support multiple sub-screens.

According to an embodiment of the present disclosure, the first electronic device 403 may communicate with an individual external electronic device. An external electronic device is referred to as the second electronic device 405. The second electronic device 405 may correspond to devices 102 or 104 in FIG. 1. The second electronic device 405 may support one or more screens.

The second electronic device 405 may include a browser engine, a browser, or software corresponding to the browser. When a content transmitted by the first electronic device 403 is not web data but rendering or event related data, the second electronic device 405 may include software capable of processing the rendering or event related data.

The second electronic device 405 may receive a part of web data from the first electronic device 403. The second electronic device 405 and the first electronic device 403 may transmit and receive the part of web data through various communication channels such as a network, Wi-Fi, or BT communication. The part of web data may include an expansion element, CSS relating to the expansion element, JavaScript, and the like.

When the second electronic device 405 includes a browser and a browser engine, the browser engine may process a content relating to an expansion element. The browser may control a screen to display a content described in the expansion element. In addition, the screen may be controlled to perform a particular function according to an event described in the expansion element.

The second electronic device 405 may also receive rendering or event related data from the first electronic device 403 when the second electronic device 405 includes software corresponding to a browser. The software corresponding to the browser of the second electronic device 405 may process rendering related data and display the result of rendering on a screen.

With regard to processing an expansion element of web data, when the first electronic device 403 supports multiple screens, the first electronic device 403 may process an expansion element to be preferentially displayed on a sub-screen although the first electronic device 403 is communicating with the second electronic device 405. However, the process is not limited thereto.

An electronic device such as devices 403 and 405 according to one of various embodiments of the present disclosure may include a housing, at least one display that provides a first screen exposed in a part of the housing and a second screen arranged to be spaced from, neighboring, or adjacent to the first screen, a wireless communication circuit, a processor electrically connected to the display and the wireless communication circuit, and a memory electrically connected to the processor, wherein the memory stores instructions allowing, when executed, the processor to at least temporarily store content data in the memory, recognize an indication that a data part is to be displayed on the second screen, within the stored data, display the data part on the second screen based on the recognized indication, and display on the first screen, at least a part of the remainder of the content data.

According to various embodiments of the present disclosure, the content data may be configured to include web data.

According to various embodiments of the present disclosure, the content data may be configured to include a markup language, and the indication may be configured to include a tag.

An electronic device such as devices 403 and 405 according to one of various embodiments of the present disclosure may also include a housing, a display exposed in a part of the housing, a wireless communication circuit, a processor electrically connected with the display and the wireless communication circuit, and a memory electrically connected with the processor, wherein the memory stores instructions allowing, when executed, the processor to at least temporarily store content data in the memory, recognize an indication that a data part is to be displayed on a display of an external electronic device connected with the electronic device, within the stored content data, transmit to the connected external device, at least a part of the data part to be displayed on the display of the external electronic device, based on the recognized indication, and display on the display, at least a part of the remainder of the content data.

According to various embodiments of the present disclosure, the instructions may be configured such that the processor transmits to the external electronic device, a request for displaying at least a part of the data part to be displayed in the external electronic device on the display of the external electronic device.

An electronic device such as devices 403 and 405 according to one embodiment of various embodiments of the present disclosure may be configured by a communication module that receives a web content, a display unit that displays the web content, and a control unit that processes web data corresponding to the web content, wherein the control unit divides and generates a main DOM tree and an expanded DOM tree according to the attribute of an expansion element by parsing web data corresponding to the web content, performing rendering, on the basis of the main DOM tree, of a web content related to the main DOM tree that is displayed on a first screen of the display unit, and performing rendering, based on the expanded DOM tree, of web content related to the expanded DOM tree that is displayed on a second screen of the display unit.

According to various embodiments of the present disclosure, the expanded DOM tree may be configured to be generated based on expanded data including the expansion element.

According to various embodiments of the present disclosure, the main DOM tree is configured to be generated based on data other than the expanded data in the web data.

According to various embodiments of the present disclosure, the expansion element may be configured to include data relating to at least one event.

According to various embodiments of the present disclosure, the control unit may be configured to process each screen to be activated or deactivated according to the event.

According to various embodiments of the present disclosure, the control unit may be configured to process display times on the screens to be controlled according to the event.

According to various embodiments of the present disclosure, the control unit may be configured to process a screen on which the expanded data is displayed to be selected according to the event.

According to various embodiments of the present disclosure, the screen on which the expanded data is displayed may be configured to include a screen of an external electronic device.

According to various embodiments of the present disclosure, the control unit may be configured to control the communication module to transmit the expanded DOM tree to an external electronic device having at least one screen.

According to various embodiments of the present disclosure, the control unit may be configured to process an event, perform rendering of a main DOM tree that is updated as the event is being processed, display the same on a screen, and transmit the updated main DOM tree to the external electronic device when data relating to the event with respect to the electronic device is received from the external electronic device.

According to various embodiments of the present disclosure, the main DOM tree transmitted to the external electronic device may be a virtual main DOM tree.

According to various embodiments of the present disclosure, the control unit may be configured to receive, from the external electronic device, an expanded DOM tree updated as an event relating to the external electronic device is being processed, and update the existing expanded DOM tree to be the updated expanded DOM tree.

According to various embodiments of the present disclosure, the control unit may be configured to detect a user's input, identify the user's input to be an event relating to the expanded DOM tree, transmit to the external electronic device, the event and a main DOM node updated according to the event, and update by receiving, from the external electronic device, the expanded DOM tree of the expanded DOM node that is updated according to the event.

According to various embodiments of the present disclosure, the main DOM node may be a part of the main DOM tree.

According to various embodiments of the present disclosure, the main DOM node transmitted to the external electronic device may include a virtual main DOM node.

According to various embodiments of the present disclosure, the expanded DOM node may include a part of the expanded DOM tree.

According to various embodiments of the present disclosure, a computer-readable recording medium may be provided in which a program for executing a method for displaying a web content by an electronic device according to one of various embodiments of the present disclosure is recorded. The method may include the operations of adding expanded data including one or more expansion elements to web data corresponding to the web content, and adding an event to the one or more expansion elements.

According to various embodiments of the present disclosure, the web data may include an HTML document, CSS, and JavaScript.

According to various embodiments of the present disclosure, the expanded data may include an HTML document of the expansion element, CSS, and JavaScript.

According to various embodiments of the present disclosure, the event may include an event capable of changing an attribute.

According to various embodiments of the present disclosure, the event may include an event designating at least one screen to display a web content relating the one or more expansion elements.

According to various embodiments of the present disclosure, the at least one screen may include a screen of an external electronic device.

According to various embodiments of the present disclosure, the event may include an event that controls activation or deactivation of the at least one screen.

According to various embodiments of the present disclosure, the event may include an event that controls a display time on the at least one screen.

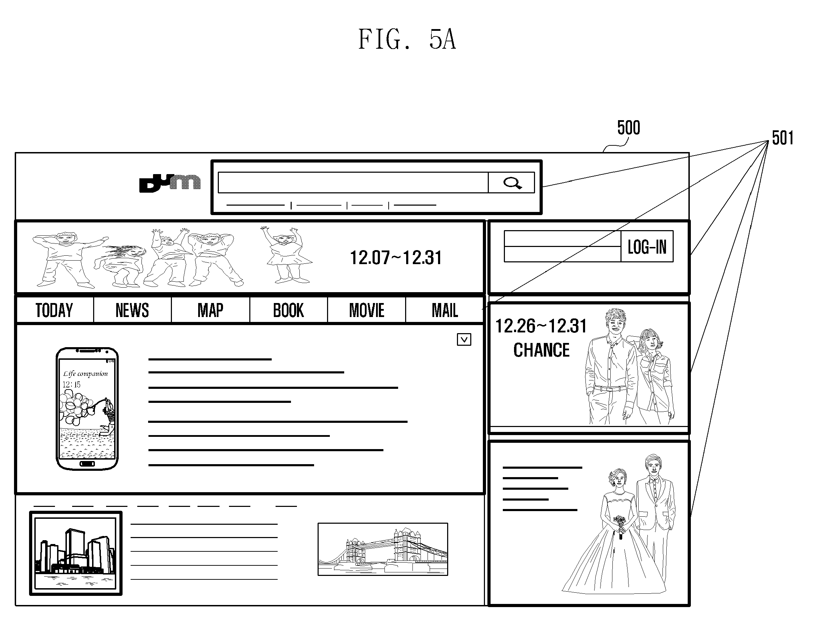

FIGS. 5A to 5C are diagrams illustrating an embodiment of a content provider for displaying a web content according to various embodiments of the present disclosure.

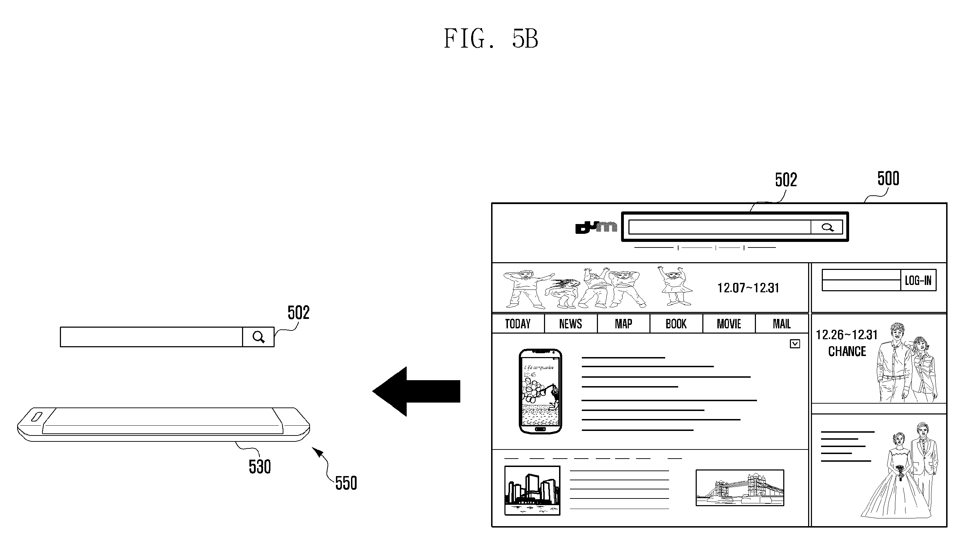

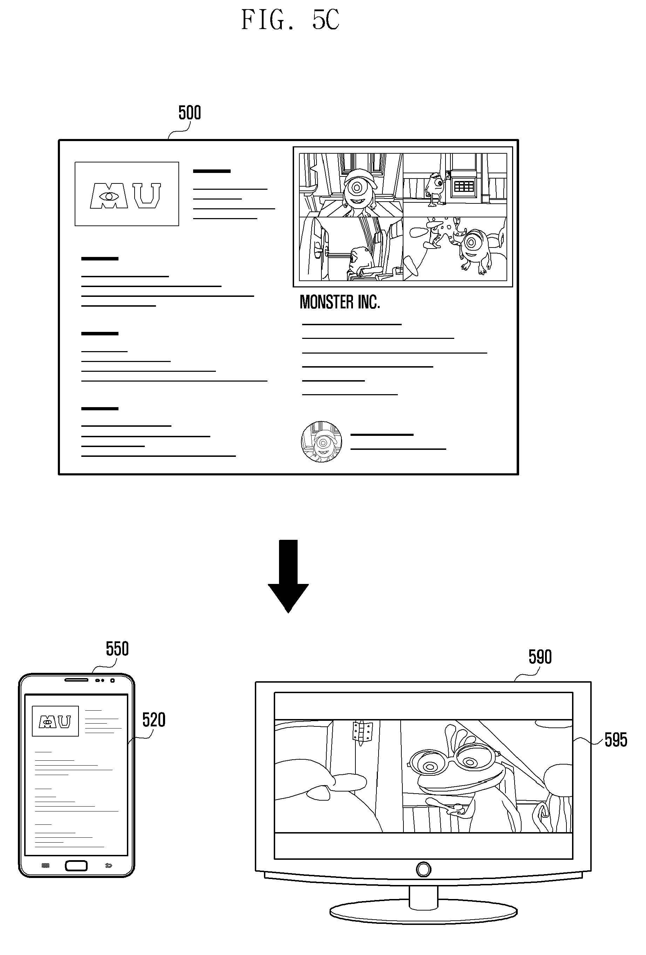

Referring to FIGS. 5B and 5C, a first electronic device 550 may include at least one of a main screen 520 and a sub-screen 530.

Referring to FIG. 5A, a content provider may add, to web data of a web content 500, an expansion element and JavaScript and CSS relating to the expansion element when the web content 500 is developed. The content provider may perform the addition in consideration of a division, by a browser, of the expansion element.

The first electronic device 550 may at least temporarily store received web data in a memory of the first electronic device 550. In addition, the first electronic device 550 may recognize an expansion element that is an indication of a data part to be displayed on the sub-screen 530 within the stored web data, and the first electronic device 550 may store instructions that allow the data part to be displayed on the sub-screen 530 based on the indication.

Accordingly, the first electronic device 550 may divide an object 501 corresponding to the expansion element and display the divided object 501 on the sub-screen 530 by performing the instructions when the web data received from the content provider 401 has the expansion element.

Referring to FIG. 5B, a browser may allow an object 502 corresponding to the divided expansion element to be displayed on the sub-screen 530 of the first electronic device 550.

Referring to FIG. 5C, the content provider may divide an object having a high resolution image or video from the web content 500 including the high resolution image or video, and add the same to the expansion element of web data of the web content 500.

The first electronic device 550 may at least temporarily store received web data in a memory of the first electronic device 550. In addition, the first electronic device 550 may indicate an expansion element that is an indication of a data part to be displayed on a screen 595 of a second electronic device 590 that is an individual electronic device connected within the stored web data. The first electronic device 550 may transmit to the second electronic device 590, at least a part of the data part to be displayed on the screen 595 of the second electronic device 590, based on the indication. The first electronic device 550 may store instructions that allow at least a part of the remainder of the web data to be displayed on the screen 520 of the first electronic device 550. In addition, the first electronic device 550 may store an instruction that transmits a request for displaying, by the second electronic device 590, at least a part of the data part to be displayed on the screen 595 of the second electronic device 590.

For example, the individual second electronic device 590 connected to the first electronic device 550 may be a device that may be able to process a higher resolution than the first electronic device 550. The second electronic device 590 may display an object relating to an image or video added to an expansion element on the screen 595 of the second electronic device 590 by performing the instructions, and the first electronic device 550 may display an object corresponding to elements other than the expansion element on the screen 520 of the first electronic device 550.

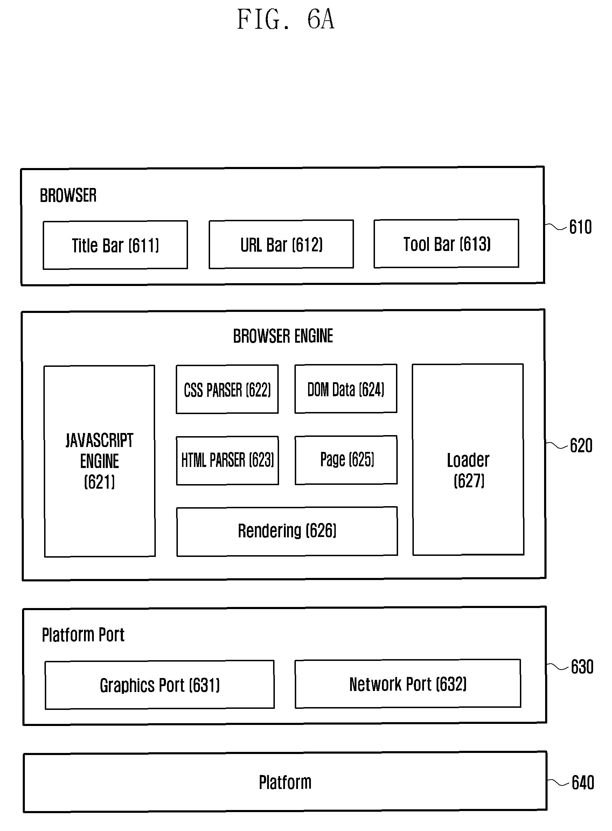

FIG. 6A is a diagram illustrating a browser and a configuration of a browser engine for displaying a web content according to various embodiments of the present disclosure.

Referring to FIG. 6A, a diagram is shown illustrating a DOM tree of an HTML document for displaying a web content according to various embodiments of the present disclosure.

A browser 610 and browser engine 620 illustrated in FIG. 6A may correspond to the browsers and browser engines of the first electronic device 403 and second electronic device 405.

The browser 610 may include configurations of a title bar 611, a uniform resource locator (URL) bar 612, and a tool bar 613, but embodiments are not limited thereto. The browser 610 may include other additional configurations.

The browser engine 620 may include a JavaScript engine 621, a CSS parser 622, an HTML parser 623, DOM data 624, a page 625, rendering 626, and a loader 627.

The JavaScript engine 621 is provided to interpret a tag in HTML.

The CSS parser 622 may process CSS and generate a CSS object model (CSSOM) that is a tree structure of CSS.

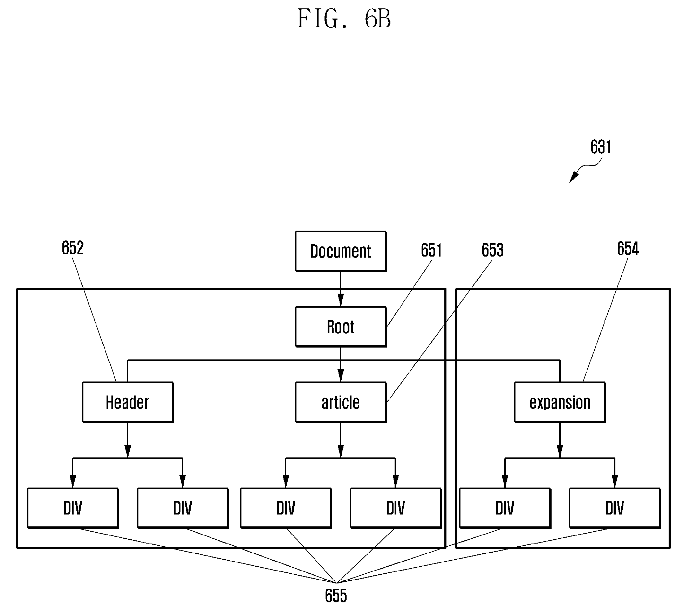

The HTML parser 623 may read an HTML document as it is converted into bytecode and convert the same as an individual character according to a designated file encoding value. The HTML parser may convert characters into unique tokens, and the tokens may include a <header>, <article>, and the like. In addition, the HTML parser may convert the tokens into objects through a lexing process, connect each of the objects in a tree structure, and generate a DOM tree. A DOM tree is illustrated in FIG. 6B. The browser engine 620 may further include both the HTML parser 623 and an XML parser.

The DOM data 624 may include a DOM tree generated by the HTML parser 623. In addition, the DOM tree may be a render tree by being combined with the CSSOM that is a tree structure with respect to CSS generated by a CSS parser.

The page 625 may be a master group implementing a page using configurations of a JavaScript engine and the browser engine 620.

The rendering 626 is a configuration for performing parsing and layout for a document written through an HTML document and CSS that configures the page.

The loader 627 may load web data from a network port 632 of a platform port 630.

The platform port 630 may perform each function at the bottom end of a WebCore. A graphic port 631 in the platform port 630 may show a user the processes of drawing a picture, typing a character, and the like, using an interface, which are performed by the browser engine. The network port 632 may receive web data from the content provider 401.

A platform 640 mounted in an electronic device may allow a hardware function of the electronic device to be used in an upper layer, provide a programming environment and an execution environment to an uppermost application layer and thus, generally refer all software from an operating system to an AP.

FIG. 6B is a diagram illustrating a DOM tree of an HTML document for displaying a web content according to various embodiments of the present disclosure.

Referring to FIG. 6B, a DOM tree 631 is configured by multiple elements and each of the elements may be connected forming a hierarchical relationship. The DOM tree 631 may start from a root node 651, be connected to a number of branches, and finally end in a DIV node 655. In addition, the HTML parser 623 may form one individual branch starting from <expansion> 654 with respect to an expansion element added by the content provider 401. Another individual branch starts from <header> 652 and another individual branch starts from <article> 653.

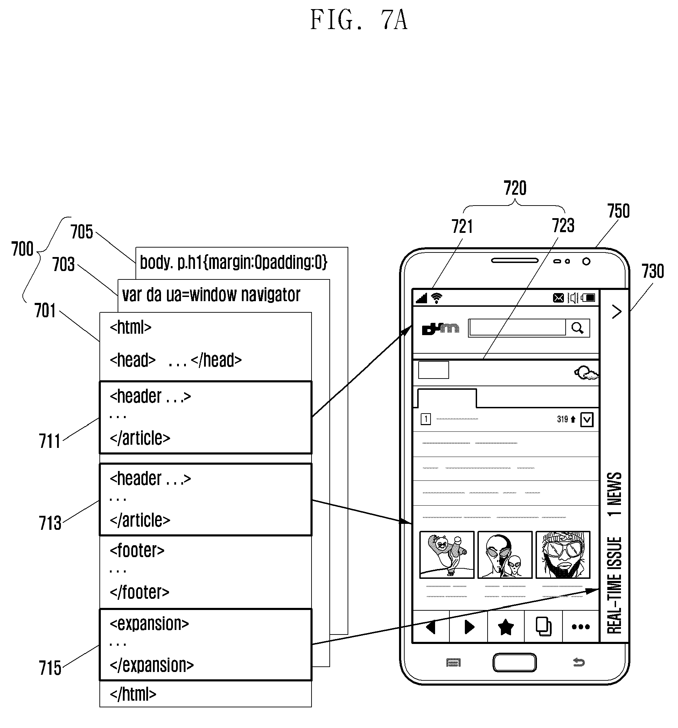

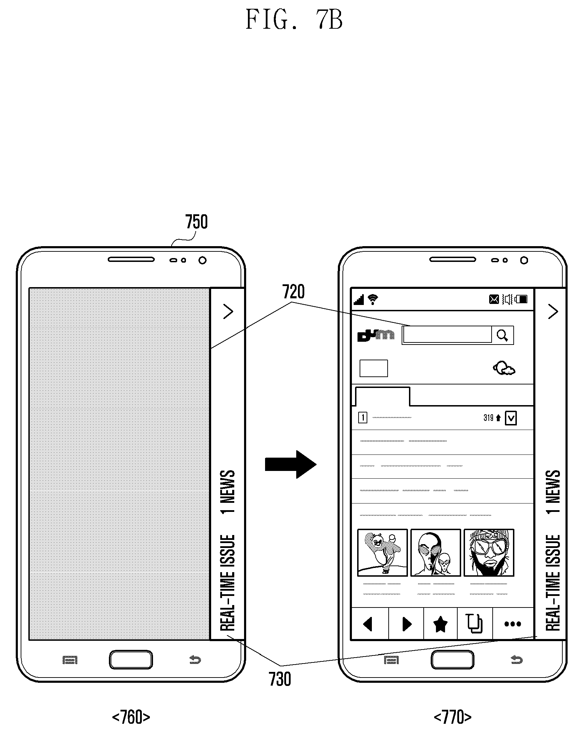

FIGS. 7A and 7B are diagrams illustrating an embodiment displaying a web content according to various embodiments of the present disclosure.

Referring to FIGS. 7A and 7B, a first electronic device 750 may include an individual browser and browser engine that process an expansion element, in addition to a browser and a browser engine. The browser engine loader may load web data 700 through a network port. The web data 700 may include an HTML document 701, JavaScript 703, CSS 705, and so on. The HTML document 701 received from the content provider 401 may include various elements. For example, the HTML document 701 may include a <header> 711, an <article> 713, and so on. In addition, an expansion element <expansion> 715 added by the content provider 401 may be included.

The <header> 711 of the web data 700 may include a name, search box, URL address, and the like, of a portal site if the web data 700 is related to the portal site. The <article> 713 may include a list of articles, article images, weather information, and the like, of the portal site. The <expansion> 715 may include a real-time keyword.

An HTML parser of the browser engine may generate a DOM tree having a tree structure for the HTML document 701 in the loaded web data 700. Here, the HTML parser of the browser engine may generate the main DOM tree using elements in the HTML document 701. In addition, a CSS parser of the browser engine may generate a CSSOM tree for CSS 705 corresponding to the elements. The browser engine may generate a render tree by combining the main DOM tree and the CSSOM tree. Further, JavaScriptCore of the browser engine may execute scripts for JavaScript 703 relating to the element.

The browser engine may have the render tree and JavaScript 703 as input values and draw a web content that the web data 700 desires to indicate, using a graphic port. The drawn web content may be output on a main screen 720. The browser engine may include and process an expansion element, but may not draw the web content corresponding to the expansion element using the graphic port.

As the result, a content of the <header> 711 may be displayed in the area 721 of the main screen. According to an embodiment, a name, search box, URL address, and the like, of a portal site may be displayed in the form of an image, text, or so on, in the area 721 of the main screen.

A content of the <article> 713 may be displayed in an area 723 of the main screen. According to an embodiment, a list of articles, article images, weather information, and the like, of a portal site may be displayed in the form of image, text, or the like, in the area of the main screen 723.

The HTML parser of the browser engine may generate an expanded DOM tree for the additional expansion element 715, in the HTML document 701.

Referring to FIG. 7A, the <expansion> 715 may correspond to an expansion element. In addition, the CSS parser of the browser engine may generate a CSSOM tree for CSS corresponding to the expansion element 715 in CSS 705. The browser engine may generate a render tree by combining the expanded DOM tree and the CSSOM tree. Further, JavaScriptCore of the browser engine may execute scripts for JavaScript relating to the expansion element 715, in JavaScript 705.

A sub-screen 730 may display a content of the <expansion> 715. For example, when a real-time keyword is in the <expansion> 715 element, the content of the <expansion> 715 may be displayed as an image, a text, or the like, in the area of the sub-screen 730.

Each of screens 720 and 730 display web contents thereon, and are also controlled according to the attribute of events in the element. According to an embodiment, the main screen 720 may be controlled through an event within the expansion element 715.

Referring to the view of reference numeral 760 as illustrated in FIG. 7B, the main screen 720 of the first electronic device 750 may be deactivated, and the sub-screen 730 may be activated. In addition, an expansion element may include an event that activates the main screen 720 when a touch is detected in at least one of an image and text on the sub-screen 730.

In this case, if a touch by a user is detected in at least one of an image and text on the sub-screen 730, the main screen 720 may be activated as illustrated in the view of reference numeral 770 as illustrated in FIG. 7B. In addition, the main screen 720 may display a content relating to at least one of an image and text touched on the sub-screen 730.

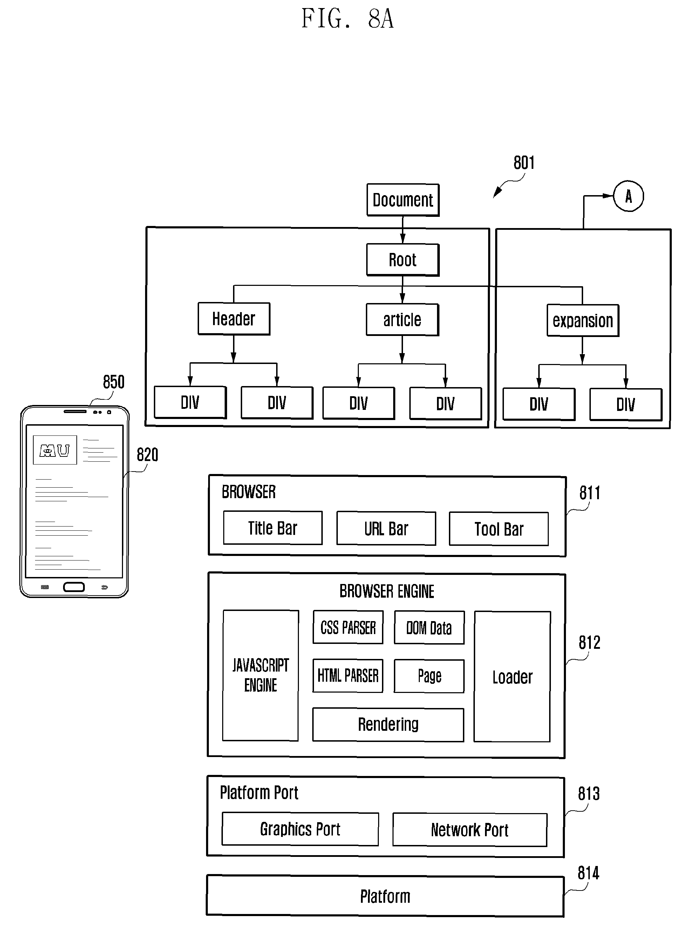

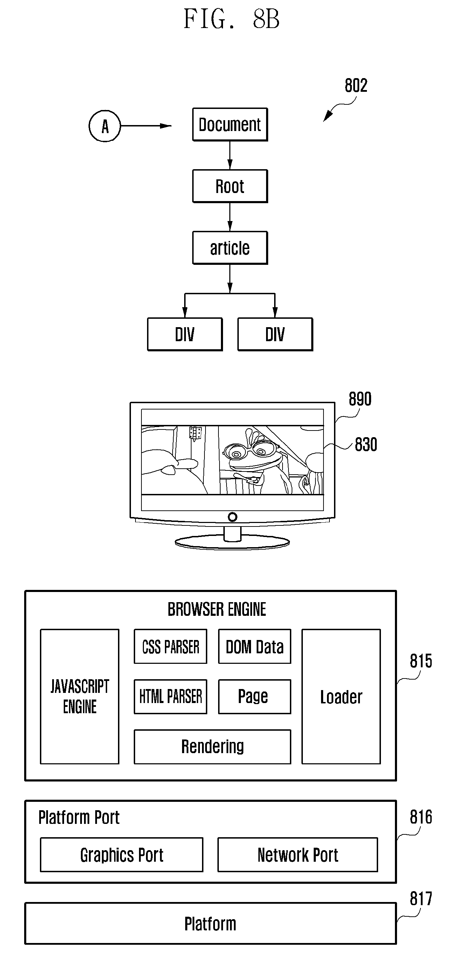

FIGS. 8A and 8B are diagrams illustrating an embodiment displaying a web content according to various embodiments of the present disclosure.

Referring to FIGS. 8A and 8B, a first electronic device 850 is assumed to have one screen, e.g., a main screen 820, and a second electronic device 890 communicating with the first electronic device 850 illustrates an embodiment displaying a web content when the second electronic device 890 has a screen 830 but does not have a browser.

Referring to FIG. 8A, a loader of a browser engine 812 of a browser 811 the first electronic device 850 may load web data through a network port of a platform port 813 of a platform 814. Web data may include an HTML document, JavaScript, CSS, and the like. The HTML document received from the content provider 401 may include a number of elements. For example, the HTML document may include a <header>, <article>, and the like. In addition, expansion element <expansion> added by the content provider 401 may be included.

When web data relates to a movie information providing site, the web data may also include a movie poster, a movie trailer, a movie synopsis, a movie title, and the like.

An HTML parser of the browser engine 812 of the first electronic device 850 may generate a DOM tree 801 for the HTML document in the loaded web data. According to an embodiment of the present disclosure, the HTML parser of the browser engine 812 identifies the attribute of an expansion element of the HTML document, and may divide and generate the DOM tree 802 relating to the expansion element when the attribute of the expansion element is expandable. In addition, a CSS parser of the browser engine 812 may divide and generate a CSSOM tree for CSS corresponding to the expansion element. The browser engine 812 may generate a render tree by combining the DOM tree 802 relating to the expansion element and the CSSOM tree.

According to an embodiment, the browser engine 812 may divide and generate the DOM tree 801 relating to elements other than an expansion element of the HTML document in web data and the DOM tree 802 relating to the expansion element. The CSS parser of the browser engine 812 may divide and generate the CSSOM tree for CSS corresponding to elements other than the expansion element and the CSSOM tree relating to the expansion element. The browser engine 812 may generate a render tree by combining the DOM tree relating to elements other than the expansion element and the CSSOM tree.

The first electronic device 850 may transmit to the second electronic device 890, the DOM tree 802 relating to the divided and generated expansion element, CSS relating to an expansion element, and JavaScript relating to an expansion element. According to an embodiment, the first electronic device 850 may transmit to the second electronic device 890, the render tree having the DOM tree 802 relating to an expansion element and CSSOM combined therein and JavaScript relating to an expansion element.

Referring to FIG. 8B, the second electronic device 890 may control a loader of the browser engine 815 and load, from the network port of a platform port 816 of a platform 817, the DOM tree 802 relating an expansion element, CSS relating to an expansion element, and JavaScript relating an expansion element. According to an embodiment, the second electronic device 890 may control a loader of the browser engine 815 and load, from the network port of the platform port 816, the render tree having the DOM tree 802 relating to an expansion element and CSSOM combined therein and JavaScript relating to an expansion element. The browser engine 815 of the second electronic device 890 may perform rendering of the loaded render tree and JavaScript and output the same on the screen 830 of the second electronic device 890.

Referring again to FIG. 8A, the first electronic device 850 has the browser engine 812 that may perform rendering of a DOM tree relating to elements other than an expansion element in the generated DOM tree 801 and output the rendered DOM tree on the screen 820 of the first electronic device 850.

For example, when a web content relating to an expansion element is a movie trailer, web contents other than the movie trailer such as a movie poster image, or a movie synopsis may be displayed on the screen 820 of the first electronic device 850. The movie trailer that is a web content relating to an expansion element may be displayed on the screen 830 of the second electronic device 890.

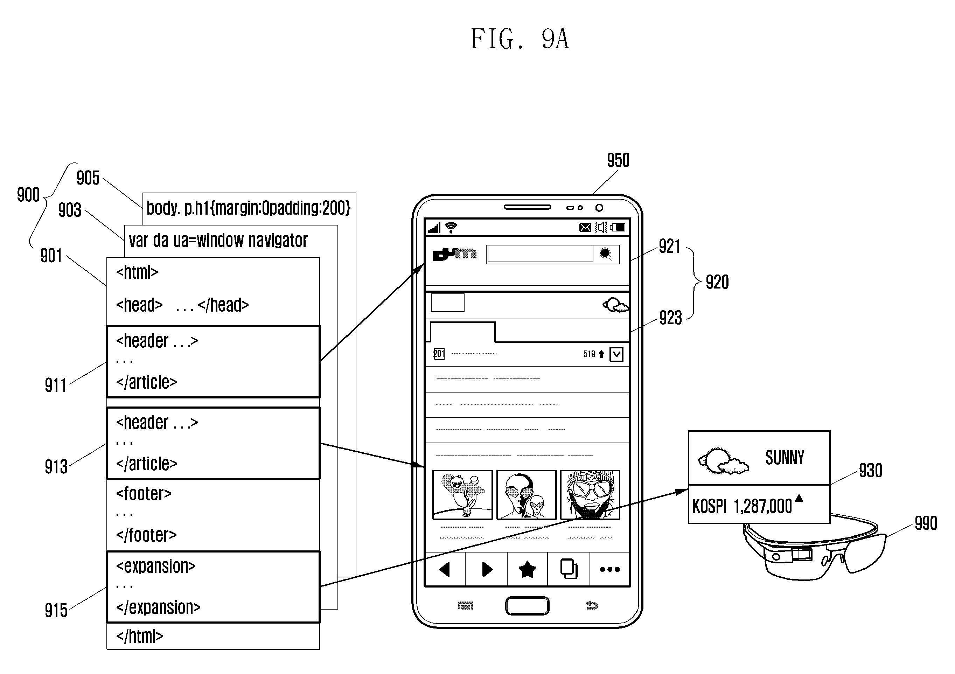

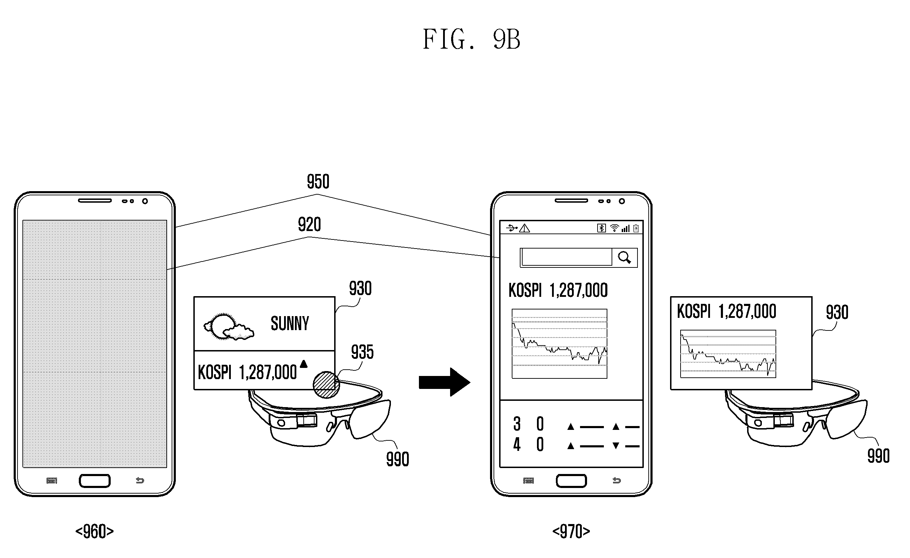

FIGS. 9A and 9B are diagrams illustrating an embodiment displaying a web content according to various embodiments of the present disclosure.

Referring to FIGS. 9A and 9B, a first electronic device 950 may have a screen 920, and a second electronic device 990 in communication with the first electronic device 950 may include a screen 930. The second electronic device 990 may also include a browser.

Referring to FIG. 9A, a browser engine loader of the first electronic device 950 may load web data 900 through a network port. The web data 900 may include an HTML document 901, JavaScript 903, CSS 905, and the like. The HTML document 901 received from the content provider 401 may include various elements. For example, the HTML document 910 may include a <header> 911, an <article> 913, and the like. In addition, expansion element <expansion> 915 may be included.

According to an embodiment of the present disclosure, if the web data 900 relates to a portal site, the <header> 911 of the web data 900 may include a name, search box, URL address, and the like, of the portal site. The <article> 913 may include a list of articles, article images, weather information, and the like, of the portal site. The <expansion> 915 may include a thumb nail image of any one of the articles.

An HTML parser of the browser engine of the first electronic device 950 may divide, from the expansion element 915 and CSS 905 in the HTML document 901, CSS relating to the expansion element 915 and JavaScript relating to the expansion element 915 in JavaScript 905. The second electronic device 990 that is communicating with the first electronic device 950 may receive the divided expansion element 915, and CSS and JavaScript relating the expansion element 915.

The HTML parser of the browser engine of the first electronic device 950 may process the HTML document 901. The HTML parser may generate a main DOM tree using the elements. A CSS parser of the browser engine of the first electronic device 950 may generate a CSSOM tree for CSS corresponding to the elements. The browser engine of the first electronic device 950 may generate a render tree by combining the main DOM tree and the CSSOM tree. In addition, JavaScriptCore of the browser engine of the first electronic device 950 may execute scripts for JavaScript relating to the elements.

The browser engine of the first electronic device 950 may have the render tree and the JavaScript as input values and draw a web content that the web data 900 desires to indicate, using a graphic port. The drawn web content may be output on the screen 920 of the first electronic device 950. The browser engine of the first electronic device 950 may include and process the expansion element, but may not draw the web content corresponding to the expansion element using the graphic port.

An area 921 of the screen of the first electronic device 950 may display a content of the <header> 911. According to an embodiment, a name, search box, URL address, and the like, of a portal site may be displayed in the form of an image or text, in the area 921 of the screen of the first electronic device 950.

An area 923 of the screen of the first electronic device 950 may display a content of the <article> 913. According to an embodiment, a list of articles, article images, weather information, and the like, may be displayed in the form of an image or text, and the like, in the area 923 of the screen of the first electronic device 950.

The second electronic device 990 may control the browser engine of the second electronic device 990 in order to output, on the screen 930 of the second electronic device 990, the web content included in the expansion element 915.

The browser of the second electronic device 990 may load the expansion element 915, and the CSS and JavaScript relating to the expansion element 915 through a network port, in the first electronic device 950.

Referring again to FIG. 9A, the expansion element 915 may be <expansion>. The HTML parser of the browser engine of the second electronic device 990 may generate an expanded DOM tree having a tree structure for the expansion element 915 of the HTML document 901 in the loaded web data 900. In addition, the CSS parser of the browser engine of the second electronic device 990 may generate a CSSOM tree for CSS corresponding to the expansion element. The browser engine of the second electronic device 990 may generate a render tree by combining the extended DOM tree and the CSSOM tree. Further, JavaScriptCore of the browser engine of the second electronic device 990 may execute scripts for JavaScript relating to the expansion element 915.

The browser engine of the second electronic device 990 may have the render tree and the JavaScript as input values and draw a web content that the web data 900 desires to indicate, using a graphic port. The drawn web content may be output on the screen 930 of the second electronic device 990. The screen 930 of the second electronic device 990 may display a content of the <expansion> 915. For example, the screen 930 of the second electronic device 990 may display weather and stock information.

The screen 920 of the first electronic device 950 and the screen 930 of the second electronic device 990 display the web contents and are controlled according to the attributes of events within the elements. According to an embodiment, the screen 920 of the first electronic device 950 may be controlled through an event within the expansion element 915.

Referring to the view of reference numeral 960 as illustrated in FIG. 9B, the screen 920 of the first electronic device 950 may be deactivated, and the screen 930 of the second electronic device 990 may be activated. In addition, the expansion element 915 may include an event that activates the screen 920 of the first electronic device 950 when an input (e.g., a touch 935) to at least one of an image and text on the screen 930 of the second electronic device 990 is detected. The event may be a ScreenControl event. In this case, if a touch 935 by a user is detected in at least one of an image and text on the screen 930 of the second electronic device 990, the screen 920 of the first electronic device 950 may be activated as illustrated in the view of reference numeral 970. In addition, the screen 920 of the first electronic device 950 may display a content relating to at least one of the touched image and text on the screen 930 of the second electronic device 990, and a part of the displayed content may be displayed on the screen 930 of the second electronic device 990.

According to an embodiment, the screen 930 of the second electronic device 990 may be displaying a content such as the current weather and the Korea Composite Stock Price Index (KOSPI), but embodiments are not limited thereto. Here, when the second electronic device 990 detects a selection 935 of KOSPI by a user, the screen 920 of the first electronic device 950 may be controlled to be activated according to the attribute of the event of the expansion element 915, and the selected KOSPI related content may be displayed on the screen 920 of the first electronic device 950. Further, as the KOSPI related content is displayed on the screen 920 of the first electronic device 950, a content displayed on the screen 930 of the second electronic device 990 may be switched to a part of the content displayed on the screen 920 of the first electronic device 950.

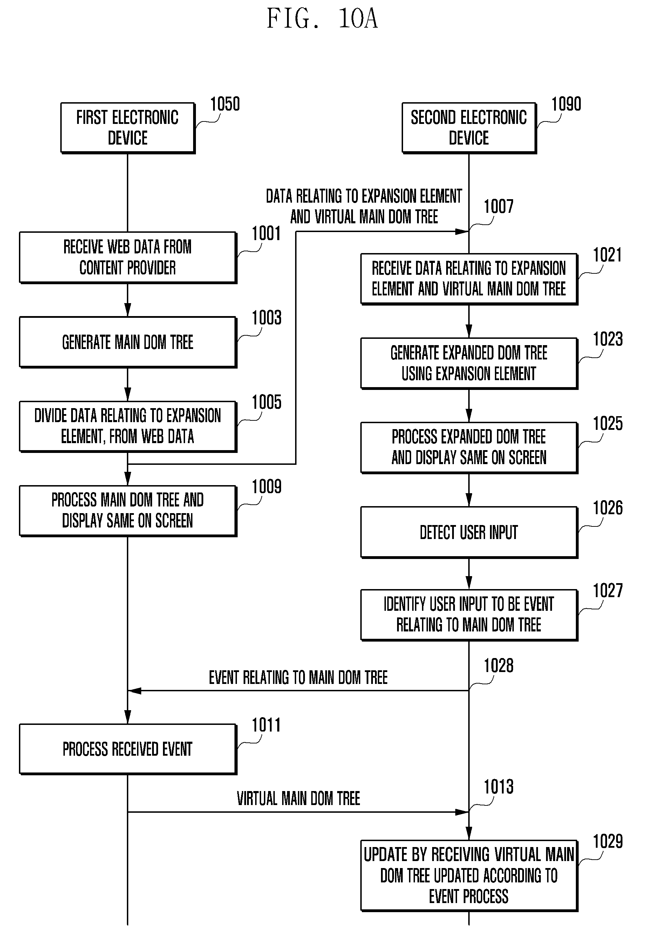

FIGS. 10A to 10C are flowchart diagrams illustrating a control among screens of two electronic devices for displaying a web content according to various embodiments of the present disclosure.

In FIGS. 10A to 10C, both of two electronic devices 1050 and 1090 are assumed to have browser engines and browsers, respectively.

Referring to FIG. 10A, the first electronic device 1050 may receive web data from a content provider in operation 1001. FIG. 10A is a diagram for illustrating a case where a user input to the first electronic device 1050 is detected by the second electronic device 1090. The first electronic device 1050 may generate a main DOM tree in operation 1003. The first electronic device 1050 may divide data relating to an expansion element from web data in operation 1005. Alternatively, the first electronic device 1050 may generate an expanded DOM tree using data relating to the divided expansion element in operation 1005.

The first electronic device 1050 may transmit to the second electronic device 1090, the data relating to the expansion element and a virtual main DOM tree in operation 1007. Alternatively, in operation 1007, the first electronic device 1050 may transmit to the second electronic device 1090, the expanded DOM tree generated in operation 1005. The first electronic device 1050 may process the main DOM tree and display the same on a screen of the first electronic device in operation 1009.

In operation 1021, the second electronic device 1090 may receive the data relating to the expansion element and the virtual main DOM tree that are transmitted by the first electronic device 1050 in operation 1007. The second electronic device 1090 may generate an expanded DOM tree using the expansion element in operation 1023. If the expanded DOM tree transmitted by the first electronic device 1050 has been received in operation 1007, operation 1023 may be skipped.

The second electronic device 1090 may process the expanded DOM tree and display the same on a screen of the second electronic device in operation 1025. The second electronic device 1090 may then detect a user input in operation 1026. The second electronic device 1090 may identify whether an event for detecting a user input is included in the main DOM tree or included in the extended DOM tree in operation 1027. If the event is included in the main DOM tree, the second electronic device 1090 may transmit the event to the first electronic device 1050 in operation 1028.

The first electronic device 1050 may process the event received from the second electronic device 1090 in operation 1011. Operation 1011 may also mean that a web content is displayed on the screen 920 of the first electronic device 950 in FIG. 9B.

The first electronic device 1050 may transmit a virtual main DOM tree updated according to the received event process in operation 1013. The second electronic device 1090 may receive and update the virtual main DOM tree in operation 1029. The second electronic device 1090 may display, on the screen of the second electronic device 1090 like FIG. 8B, a part of the web content displayed on the screen of the first electronic device by updating the main DOM tree.

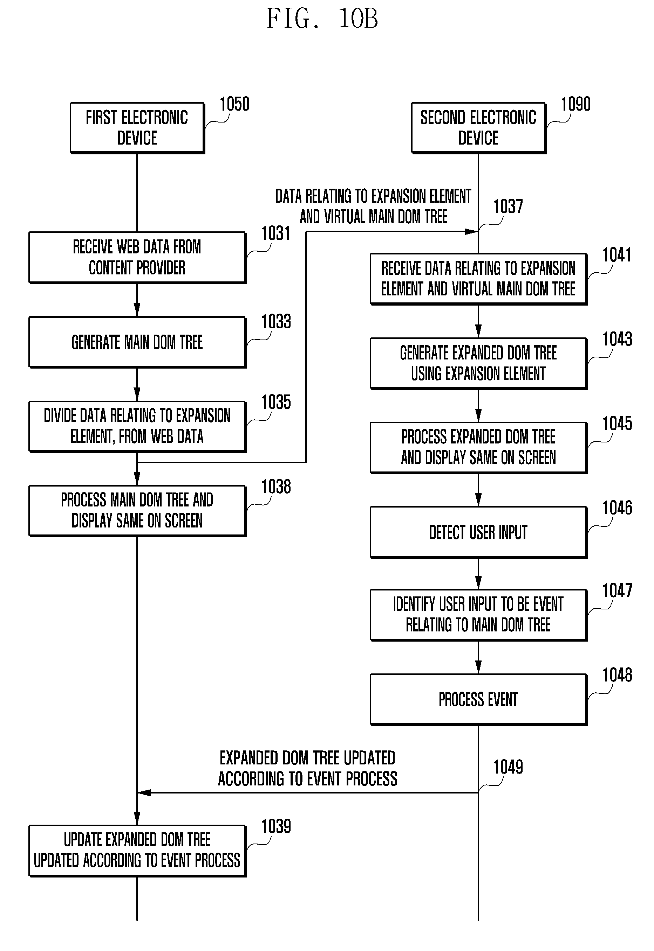

FIG. 10B is a diagram illustrating a case where a user input to a second electronic device is detected by a second electronic device according to an embodiment of the present disclosure.

Referring to FIG. 10B, the first electronic device 1050 may receive web data from the content provider 401 in operation 1031. The first electronic device 1050 may generate a main DOM tree in operation 1033. The first electronic device 1050 may divide data relating to an expansion element from the web data in operation 1035. Alternatively, the first electronic device 1050 may generate an expanded DOM tree using the data relating to the divided expansion element in operation 1035.

The first electronic device 1050 may transmit to the second electronic device 1090, the data relating to the expansion element and the virtual main DOM tree, in operation 1037. Alternatively, in operation 1037, the first electronic device 1050 may transmit to the second electronic device 1090, the expanded DOM tree generated in operation 1035. The first electronic device 1050 may process a main DOM tree and display the same on the screen of the first electronic device 1050 in operation 1038.

The second electronic device 1090 may receive, in operation 1041, the data relating to the expansion element and the virtual main DOM tree that are transmitted from the first electronic device 1050 in operation 1037. The second electronic device 1090 may generate an expanded DOM tree using the expansion element in operation 1043. If the expanded DOM tree transmitted by the first electronic device 1050 has been received in operation 1037, operation 1043 may be skipped.

The second electronic device 1090 may process the expanded DOM tree and display the same on the screen in operation 1045. The second electronic device 1090 may then detect a user input in operation 1046. The second electronic device 1090 may identify whether an event for detecting a user input is included in the main DOM tree or included in the extended DOM tree in operation 1047. If the event is included in the expanded DOM tree, the second electronic device 1090 may process the event in operation 1048. The second electronic device 1090 may transmit to the first electronic device 1050, the expanded DOM tree updated according to the event process in operation 1049. The first electronic device 1050 may update the expanded DOM tree by receiving the same in operation 1039.

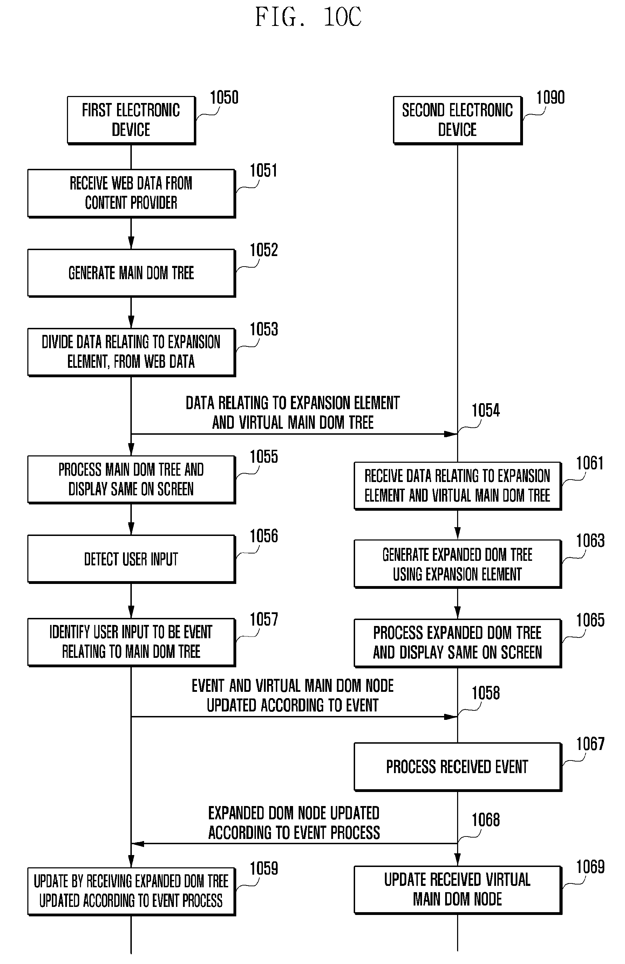

FIG. 10C is a diagram illustrating a case where a user input to a second electronic device is detected by a first electronic device according to an embodiment of the present disclosure.

Referring to FIG. 10C, the first electronic device 1050 may receive web data by the content provider 401 in operation 1051. The first electronic device 1050 may generate a main DOM tree in operation 1052. The first electronic device 1050 may divide data relating to an expansion element from the web data in operation 1053. Alternatively, the first electronic device 1050 may generate an expanded DOM tree using the data relating to the divided expansion element in operation 1053.

The first electronic device 1050 may transmit to the second electronic device 1090, the data relating to the expansion element and the virtual main DOM tree in operation 1054. Alternatively, in operation 1054, the electronic device 1050 may transmit to the second electronic device 1090, the expanded DOM tree generated in operation 1053. The first electronic device 1050 may process the main DOM tree and display the same on the screen of the first electronic device 1050, in operation 1055.

The second electronic device 1090 may receive, in operation 1061, the data relating to the expansion element and the virtual main DOM tree that are transmitted from the first electronic device 1050 in operation 1054. The second electronic device 1090 may generate an expanded DOM tree using the expansion element in operation 1063. If the expanded DOM tree transmitted by the first electronic device 1050 has been received in operation 1054, operation 1063 may be skipped.

The second electronic device 1090 may process the expanded DOM tree and display the same on the screen of the second electronic device in operation 1065.

The first electronic device 1050 may then detect a user input in operation 1056. The first electronic device 1050 may identify whether an event associated with detecting a user input is included in the main DOM tree or included in the expanded DOM tree in operation 1057. If the event is included in the expanded DOM tree, the first electronic device 1050 may transmit to the second electronic device 1090, the event and a virtual main DOM node updated according to the event in operation 1058. Here, the main DOM node may be a part of the main DOM tree, and include the event related part.

The second electronic device 1090 may process the event received from the first electronic device 1050 in operation 1067. The second electronic device 1090 may transmit to the first electronic device 1050, the expanded DOM node updated according to the received event process in operation 1068. The expanded DOM node may be a part of the expanded DOM tree, and include the event related part.

The first electronic device 1050 may update the expanded DOM tree by receiving the same in operation 1059. The second electronic device 1090 may update, in operation 1069, a virtual main DOM node received from the first electronic device 1050 in operation 1058.

A method for displaying a web content by an electronic device according to one of various embodiments of the present disclosure may include the operations of receiving a web content, parsing web data corresponding to the web content, and dividing and generating a main DOM tree and an expanded DOM tree according to the attribute of an expansion element, performing rendering of web content relating to the main DOM tree displayed on a first screen of the display unit, based on the main DOM tree, and performing rendering of web content relating to the expanded DOM tree displayed on a second screen of the display unit, based on the expanded DOM tree.

According to various embodiments of the present disclosure, a method for displaying a web content by an electronic device may be performed when the attribute of the expansion element is related to the attribute of the second screen.

According to various embodiments of the present disclosure, the main DOM tree may be generated based on data other than expanded data including the expansion element in the web data.

According to various embodiments of the present disclosure, the expansion element may include data relating to at least one event.

According to various embodiments of the present disclosure, each screen may be activated or deactivated according to the event.

According to various embodiments of the present disclosure, display times on the screens may be controlled according to the event.

According to various embodiments of the present disclosure, a screen to display the expanded data may be selected according to the event.

According to various embodiments of the present disclosure, the screen to display the expanded data may include a screen of an external electronic device.

According to various embodiments of the present disclosure, the expanded DOM tree may be transmitted to an external electronic device having at least one screen.

According to various embodiments of the present disclosure, when an event relating to the electronic device is received from the external electronic device, an operation may be performed to process an event, perform rendering of a main DOM tree that is updated as the event is being processed, display the same on a screen, and transmit the updated main DOM tree to the external electronic device.

According to various embodiments of the present disclosure, the main DOM tree transmitted to the external electronic device may include a virtual main DOM tree.

According to various embodiments of the present disclosure, an expanded DOM tree updated as the event relating to the external electronic device is being processed may be received from the external electronic device, and the existing expanded DOM tree may be updated to the updated expanded DOM tree.

According to various embodiments of the present disclosure, a user's input may be detected, and the user's input may be identified to be an event relating to an expanded DOM tree. The event and a main DOM node updated according to the event may be transmitted to the external electronic device, and an expanded DOM tree of the expanded DOM node updated according to the event may be received from the external electronic device and updated.

According to various embodiments of the present disclosure, the main DOM node may include a part of the main DOM tree.

According to various embodiments of the present disclosure, the main DOM node may include the virtual main DOM node.

According to various embodiments of the present disclosure, the expanded DOM node may include a part of the expanded DOM tree.

According to various embodiments of the present disclosure, at least part of a device (e.g., modules or the functions) or a method (e.g., operations) may be implemented with, for example, instructions stored in non-transitory computer-readable storage media which have a program module. When the instructions are executed by a processor, one or more processors may perform functions corresponding to the instructions.

The computer-readable storage media may include a hard disc, a floppy disk, magnetic media (e.g., a magnetic tape), optical media (e.g., a compact disc-ROM (CD-ROM) and a DVD), magneto-optical media (e.g., a floptical disk), a hardware device (e.g., a ROM, a RAM, or a flash memory), and the like. Also, the program instructions may include not only mechanical codes compiled by a compiler, but also high-level language codes which may be executed by a computer using an interpreter and the like. The above-mentioned hardware device may be configured to operate as one or more software modules to perform operations according to various embodiments of the present disclosure, and vice versa.

Modules or program modules according to various embodiments may include at least one or more of the above-mentioned components, some of the above-mentioned components may be omitted, or other additional components may be further included. Operations executed by modules, program modules, or other components may be executed by a successive method, a parallel method, a repeated method, or a heuristic method. Also, some operations may be executed in a different order or may be omitted, and other operations may be added.

While the present disclosure has been shown and described with reference to various embodiments thereof, it will be understood by those skilled in the art that various changes in form and detail may be made therein without departing from the spirit and scope of the present disclosure as defined by the appended claims and their equivalents.

## Claims

1. An electronic device, comprising:
a housing;
at least one display configured to provide a first screen exposed in a part of the housing and a second screen arranged to be separate from the first screen;
a wireless communication circuit;
a processor electrically connected to the display and the wireless communication circuit; and
a memory electrically connected to the processor,
wherein the memory is configured to store instructions that when executed, configure the processor to:
store, at least temporarily, content data in the memory,
recognize an indication that a data part is to be displayed on the second screen, within the stored data, and
display the data part on the second screen and at least a part of the remainder of the content data on the first screen, based on the recognized indication.

2. The electronic device of claim 1, wherein the memory is further configured to store instructions that when executed, further configure the processor to:
store, at least temporarily, content data in the memory,
recognize an indication that a data part is to be displayed on a display of an external electronic device connected to the electronic device, within the stored content data,
transmit, based on the recognized indication, the data part to be displayed on the display of the external electronic device to the connected external device, and
display, on the display, at least a part of the remainder of the content data, based on the recognized indication.

3. The electronic device of claim 2, wherein the instructions when executed, further configure the processor to transmit, to the external electronic device, a request for displaying on the display of the external electronic device, the data part to be displayed on the display of the external electronic device.

4. A method for displaying a web content by an electronic device, the method comprising:
receiving a web content;
parsing web data corresponding to the web content,
dividing and generating a main document object model (DOM) tree and an expanded DOM tree according to an attribute of an expansion element;
rendering a web content relating to the main DOM tree displayed on a first screen of the display unit, based on the main DOM tree; and
rendering a web content relating to the expanded DOM tree displayed on a second screen of the display unit, based on the expanded DOM tree.

5. The method of claim 4, wherein the dividing and generating of the DOM tree is performed when the attribute of the expansion element is related to the second screen,
wherein the expansion element includes data relating to at least one event.

6. The method of claim 4, wherein the dividing and generating of the DOM tree comprises generating the main DOM tree based on data other than expanded data including the expansion element in the web data.

7. The method of claim 5, further comprising activating or deactivating each of the first and second screens according to the event.

8. The method of claim 5, further comprising controlling display times on the first and second screens according to the event.

9. The method of claim 5, further comprising selecting a screen of the first and second screens on which the expanded data is to be displayed according to the event.

10. The method of claim 9, wherein the selected screen of the first and second screens on which the expanded data is to be displayed includes a screen of an external electronic device.

11. The method of claim 4, further comprising transmitting the expanded DOM tree to an external electronic device having at least one screen.

12. The method of claim 11, further comprising:
processing, when an event relating to the electronic device is received from the external electronic device, the event;
rendering the main DOM tree that is updated as the event is processed;
displaying the updated main DOM tree on one screen; and
transmitting the updated main DOM tree to the external electronic device.

13. The method of claim 12, wherein the main DOM tree transmitted to the external electronic device includes a virtual main DOM tree.

14. The method of claim 11, further comprising:
receiving, from the external electronic device, the expanded DOM tree updated as the event relating to the external electronic device is processed, and
updating the existing expanded DOM tree to the updated expanded DOM tree.

15. The method of claim 11, further comprising:
detecting a user's input;
identifying the user's input to be an event relating to the expanded DOM tree;
transmitting, to the external electronic device, the event and a main DOM node updated according to the event; and
updating by receiving, from the external electronic device, an expanded DOM tree of the expanded DOM node updated according to the event.
